# EUROPEAN PATENT SPECIFICATION

(11) **EP 2 392 458 B1**
(45) Date of publication and mention of the grant of the patent: **14.03.2018**
(21) Application number: 10709784.2
(22) Date of filing: 12.01.2010
(51) Int. Cl.: B32B 27/32, B32B 27/18, C08J 5/00, C08K 5/00, C08K 5/20, C08K 5/098, C08L 23/10

(54) **POLYPROPYLENE RESIN MOLDED ARTICLE**
POLYPROPYLENHARZ-FORMARTIKEL
ARTICLE MOULÉ À BASE DE RÉSINE DE POLYPROPYLÈNE

(30) Priority: 31.01.2009 JP 2009021050; 03.08.2009 JP 2009181077
(43) Date of publication of application: 07.12.2011
(73) Proprietor: New Japan Chemical Co., Ltd., Kyoto 612-8224 (JP)
(72) Inventor: YAMAGUCHI, Masayuki, Nomi-shi Ishikawa 923-1292 (JP); UCHIYAMA, Yohei, Kyoto-shi Kyoto 612-8224 (JP); IKOMA, Reira, Kyoto-shi Kyoto 612-8224 (JP); IWASAKI, Shohei, Kyoto-shi Kyoto 612-8224 (JP)
(74) Representative: Vossius & Partner Patentanwälte Rechtsanwälte mbB
(86) International application number: PCT/JP2010/050213
(87) International publication number: WO 2010/035912

(56) References cited:
- WO-A1-2007/139227
- JP-A- 8 197 640
- JP-A- 2006 089 727
- JP-A- 2007 084 813
- JP-A- 2008 120 931
- JP-A- 2008 132 611
- JP-A- 2009 001 772
- JP-A- 2009 018 500
- US-A- 4 235 365
- US-A1- 2003 049 436
- US-A1- 2005 025 922

## Description

### TECHNICAL FIELD

The present invention relates to a polypropylene-based resin molded article.

### BACKGROUND ART

Because of their excellent moldability, mechanical properties, and electrical properties, as well as their light weight, polypropylene-based resins are used in various fields as materials for film molding, sheet molding, blow molding, injection molding, etc. However, as the range of their uses has recently expanded, requirements for heat resistance and mechanical properties are becoming severer. In particular, there is an ever growing need to impart to these resins an improved balance of rigidity, heat resistant rigidity, and impact resistance that are mutually contradictory.

Examples of heretofore known methods include a method in which the polypropylene resin itself is modified (e.g., an ethylene chain is introduced to the polypropylene resin to produce an ethylene-propylene block polymer); a method in which the polypropylene resin is modified by forming an alloy with an additive such as a rubber component, an inorganic filler, etc.; and a method in which the polypropylene resin is modified by orienting a specific crystal structure or specific crystalline lamellae (Patent Documents 1 to 3).

Although these methods can yield molded articles with improved impact resistance, the molded articles are not necessarily satisfactory in all of the fields in which they are applied, in terms of the relationship of the impact resistance with other physical properties. Thus, further improvements are desired in polypropylene-based resins.

Patent Document 1: Japanese Unexamined Patent Publication No. 5-262936
Patent Document 2: Japanese Unexamined Patent Publication No. 8-100088
Patent Document 3: Japanese Unexamined Patent Publication No. 8-197640

### DISCLOSURE OF THE INVENTION

### PROBLEMS TO BE SOLVED BY THE INVENTION

An object of the invention is to provide a polypropylene-based resin molded article having an excellent balance of rigidity, heat resistance, and impact resistance, and, in particular, having high impact strength; a method for producing the polypropylene-based resin molded article; and a method for improving the impact resistance of a polypropylene-based resin molded article.

### MEANS FOR SOLVING THE PROBLEMS

The present inventors conducted extensive research to solve the above-described object, and consequently found the following.

The highly ordered crystal structure of a propylene-based polymer phase in a polypropylene-based resin molded article is considered to include crystalline lamellae stacked in layers. The present inventors succeeded in the production of a molded article including a propylene-based polymer phase having a highly ordered crystal structure in which the direction of regularity of the long period of stacked crystalline lamellae is constant; and a propylene-based polymer phase having a highly ordered crystal structure in which crystalline lamellae are stacked in a direction different from the regularity of the long period of the above-mentioned crystalline lamellae. More specifically, as will be described later in the Examples, the inventors succeeded in the production of a molded article comprising a layer of the polypropylene-based resin whose polypropylene chain (the c-axis) is oriented in a certain direction; and a layer of the polypropylene-based resin whose polypropylene chain is oriented in a direction different from that of the above-mentioned layer, wherein these layers are stacked. This molded article is distinct in that the formation of such a structure in a single propylene-based polymer molded article has been heretofore unknown. Further, the propylene-based polymer molded article of the invention has been found to exhibit improved impact resistance, while having an excellent balance of rigidity, heat resistance, and impact resistance. The invention has been accomplished based on the above findings.

In summary, the invention provides a polypropylene-based resin molded article; a method for producing the resin molded article; and a method for improving the impact resistance of a resin molded article, as given below.

Item 1. A polypropylene-based resin molded article comprising a layered structure including layers A and B comprising a polypropylene-based resin (one of the layers A and B is directly or indirectly stacked on the other layer),
   one of the layers A and B having a polypropylene chain orientation different from that of the other layer; and
   each of the layers A and B having a maximum absolute value of birefringence of 0.005 or more, the birefringences of the layers A and B being different from each other, one being positive and the other being negative.
Item 2. The polypropylene-based resin molded article according to Item 1, wherein the polypropylene chain in the layer A is oriented in a direction perpendicular to a resin flow during molding of a polypropylene-based resin composition, and the polypropylene chain in the layer B is oriented in a direction parallel to the resin flow during molding of the polypropylene-based resin composition.
Item 3. The polypropylene-based resin molded article according to Item 1 or 2, wherein the layer A is a core layer, and the layer B is a skin layer.
Item 4. The polypropylene-based resin molded article according to any one of Items 1 to 3, comprising, per 100 parts by weight of the polypropylene-based resin, 0.0001 to 1 part by weight of a β-crystal nucleating agent; and 0.001 to 1 part by weight of a fatty acid metal salt represented by Formula (1):

   (R¹COO)ₘM (1)

   wherein R¹ is a C7-C31 alkyl group, a C7-C31 alkenyl group, or a C6-C30 optionally substituted cycloalkyl group, each of the alkyl, alkenyl, and cycloalkyl groups optionally having one or two hydroxy groups; m is an integer of 2 or 3; and M is a divalent or trivalent metal.
Item 5. The polypropylene-based resin molded article according to Item 4, wherein the β-crystal nucleating agent is at least one selected from the group consisting of:
   amide compounds represented by Formula (2):

      R²(-CONHR³)ₙ (2)

      wherein n is an integer of 2 to 6; R² is a C2-C18 saturated or unsaturated aliphatic polycarboxylic acid residue, a C3-C18 alicyclic polycarboxylic acid residue, or a C6-C18 aromatic polycarboxylic acid residue; and two to six R³s are the same or different and are each a C5-C30 saturated or unsaturated aliphatic amine residue, a C5-C30 alicyclic amine residue, or a C6-C30 aromatic amine residue; and
   amide compounds represented by Formula (3): 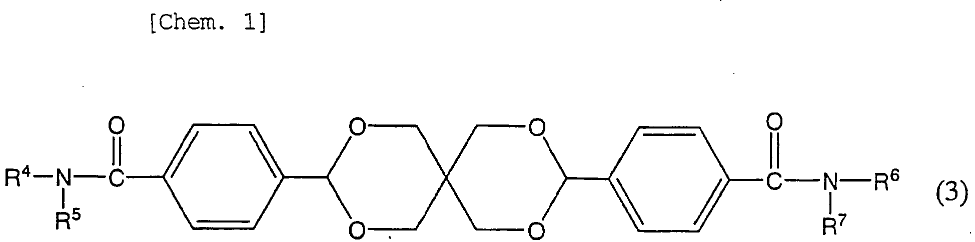 wherein R⁴, R⁵, R⁶, and R⁷ are the same or different and are each a hydrogen atom, a C1-C20 alkyl group, a C5-C20 optionally substituted cycloalkyl group, or a C6-C20 optionally substituted aryl group; and R⁴ and R⁵ or R⁶ and R⁷ may be taken together to form an alkylene group.
Item 6: The polypropylene-based resin molded article according to Item 5, wherein, in Formula (2), n is an integer of 2 or 3, R² is represented by any of Formulae (a) to (d) shown below, and two or three R³s are represented by Formula (e) shown below.
Item 7. The polypropylene-based resin molded article according to any one of Items 4 to 6, which is obtained by the following steps:
   (i) dissolving the β-crystal nucleating agent in the polypropylene-based resin by heating, to produce a molten polypropylene-based resin composition;
   (ii) cooling the molten polypropylene-based resin composition obtained in Step (i) to deposit crystals of the β-crystal nucleating agent; and
   (iii) melting the polypropylene-based resin composition cooled in Step (ii) at a temperature equal to or higher than a melting point of the polypropylene-based resin, and at which the β-crystal nucleating agent is not dissolved by heating, and subsequently molding the resulting composition; wherein
   the fatty acid metal salt is present in the polypropylene-based resin composition in Step (i) or (ii).
Item 8. A polypropylene-based resin molded article comprising a layered structure including layers A and B comprising a polypropylene-based resin, one of the layers A and B having a polypropylene chain orientation different from that of the other layer;
   the polypropylene-based resin molded article being obtained by the following steps:
   (i) dissolving the β-crystal nucleating agent in the polypropylene-based resin by heating, to produce a molten polypropylene-based resin composition;
   (ii) cooling the molten polypropylene-based resin composition obtained in Step (i) to deposit crystals of the β-crystal nucleating agent; and
   (iii) melting the polypropylene-based resin composition cooled in Step (ii) at a temperature equal to or higher than a melting point of the polypropylene-based resin, and at which the β-crystal nucleating agent is not dissolved by heating, and subsequently molding the resulting composition; wherein
      a fatty acid metal salt represented by Formula (1):

      (R¹COO)ₘM (1)

      wherein R¹ is a C7-C31 alkyl group, a C7-C31 alkenyl group, or a C6-C30 optionally substituted cycloalkyl group, each of the alkyl, alkenyl, and cycloalkyl groups optionally having one or two hydroxy groups; m is an integer of 2 or 3; and M is a divalent or trivalent metal, is present in the polypropylene-based resin composition in Step (i) or (ii).
Item 9. The polypropylene-based resin molded article according to Item 8, wherein each of the layers A and B has a maximum absolute value of birefringence of 0.005 or more, and the birefringences of the layers A and B are different from each other, one being positive and the other being negative.
Item 10. The polypropylene-based resin molded article according to Item 8 or 9, wherein the crystals of the β-crystal nucleating agent are oriented in a direction of a resin flow during molding of the polypropylene-based resin composition; the polypropylene chain in the layer A is oriented in a direction perpendicular to the orientation of the crystals of the β-crystal nucleating agent; and the polypropylene chain in the layer B is oriented in a direction parallel to the orientation of the crystals of the β-crystal nucleating agent.
Item 11. The polypropylene-based resin molded article according to any one of Items 8 to 10, wherein the layer A is a core layer, and the layer B is a skin layer.
Item 12. The polypropylene-based resin molded article according to any one of Items 8 to 11, comprising, per 100 parts by weight of the polypropylene-based resin, 0.0001 to 1 part by weight of the β-crystal nucleating agent and 0.001 to 1 part by weight of the fatty acid metal salt represented by Formula (1) above.
Item 13. The polypropylene-based resin molded article according to any one of Items 8 to 12, wherein the β-crystal nucleating agent is at least one selected from the group consisting of:
   amide compounds represented by Formula (2):

      R²(-CONHR³)ₙ (2)

      wherein n is an integer of 2 to 6; R² is a C2-C18 saturated or unsaturated aliphatic polycarboxylic acid residue, a C3-C18 alicyclic polycarboxylic acid residue, or a C6-C18 aromatic polycarboxylic acid residue; and two to six R³s are the same or different and are each a C5-C30 saturated or unsaturated aliphatic amine residue, a C5-C30 alicyclic amine residue, or a C6-C30 aromatic amine residue; and
   amide compounds represented by Formula (3): 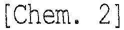 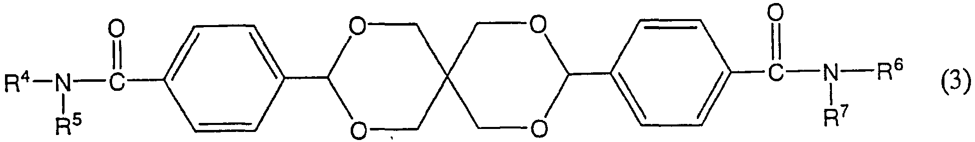
   wherein R⁴, R⁵, R⁶, and R⁷ are the same or different and are each a hydrogen atom, a C1-C20 alkyl group, a C5-C20 optionally substituted cycloalkyl group, or a C6-C20 optionally substituted aryl group; and R⁴ and R⁵ or R⁶ and R⁷ may be taken together to form an alkylene group.
Item 14. The polypropylene-based resin molded article according to Item 13, wherein, in Formula (2), n is an integer of 2 or 3, R² is represented by any of Formulae (a) to (d) shown below, and two or three R³s are represented by Formula (e) shown below.
Item 15. A method for producing a polypropylene-based resin molded article with high impact resistance, comprising the steps of:
   (i) dissolving the β-crystal nucleating agent in the polypropylene-based resin by heating, to produce a molten polypropylene-based resin composition;
   (ii) cooling the molten polypropylene-based resin composition obtained in Step (i) to deposit crystals of the β-crystal nucleating agent; and
   (iii) melting the polypropylene-based resin composition cooled in Step (ii) at a temperature equal to or higher than a melting point of the polypropylene-based resin, and at which the β-crystal nucleating agent is not dissolved by heating, and subsequently molding the resulting composition; wherein
      a fatty acid metal salt is present in the polypropylene-based resin composition in Step (i) or (ii).
Item 16. A method for improving the impact resistance of a polypropylene-based resin molded article, comprising stacking (directly or indirectly) at least two layers comprising a polypropylene-based resin, one of these layers having a polypropylene chain orientation different from that of the other layer; and
   each of the layers having a maximum absolute value of birefringence of 0.005 or more, the birefringences of the layers being different from each other, one being positive and the other being negative.

### EFFECTS OF THE INVENTION

In accordance with the invention, a distinct polypropylene-based resin molded article is provided. This molded article has an excellent balance of rigidity, heat resistance, and impact resistance, and, in particular, has high impact strength. Furthermore, a method for producing the novel polypropylene-based resin molded article, as well as a method for improving the impact resistance of a polypropylene-based resin molded article, are provided.

### BEST MODE FOR CARRYING OUT THE INVENTION

### Polypropylene-Based Resin Molded Article

The polypropylene-based resin molded article of the invention has two layers comprising a polypropylene-based resin, wherein one of the layers A and B has a polypropylene chain orientation different from that of the other layer. One of the layers A and B is (directly or indirectly) stacked on the other layer. Moreover, each of the two layers has a maximum absolute value of birefringence of 0.005 or more, and the birefringences of these layers are different from each other, one being positive and the other being negative. More specifically, the polypropylene-based resin molded article includes a propylene-based polymer phase having a highly ordered crystal structure in which crystalline lamellae are stacked such that the direction of regularity of the long period of the crystalline lamellae is constant; and a propylene-based polymer phase having a highly ordered crystal structure in which crystalline lamellae are stacked in a direction different from the direction of regularity of the long period of the above-mentioned crystalline lamellae; wherein one of these layers is stacked on the other layer. By adopting these features, the impact resistance can be particularly improved.

The description of the polypropylene-based resin molded article also applies to the method of the invention for improving the impact resistance of a polypropylene-based resin molded article.

### Polypropylene-Based Resin

Polypropylene-based resins for use in the polypropylene-based resin molded article of the invention are polymers containing propylene as a principal component. Examples of such polypropylene-based resins include polypropylene homopolymers, propylene-based random copolymers of propylene and other α-olefins, preferably having 2 or 4 to 20 carbon atoms, and particularly preferably 2 or 4 to 8 carbon atoms; propylene-based block copolymers of propylene and other α-olefins, preferably having 2 or 4 to 20 carbon atoms, and particularly preferably 2 or 4 to 8 carbon atoms; propylene-based, multi-component propylene-ethylene-diene copolymers, wherein examples of dienes include 5-ethylidene-2-norbornene, 5-methylene-2-norbornene, 1,4-hexadiene, etc.; propylene-based copolymers of propylene and small amounts of comonomers such as styrene, maleic anhydride, (meth)acrylic acid, etc.; and blend polymers of the above-mentioned polypropylene-based resins and small amounts of thermoplastic resins.

The term "propylene-based" means that propylene units are present in the copolymer in an amount of at least 50 wt%, preferably from 70 wt% to less than 100 wt%, and more preferably 80 to less than 100%.

More specifically, the polypropylene-based resin of the invention may be a polypropylene homopolymer or a propylene-based copolymer; and examples of these polymers include: propylene-ethylene random copolymers; propylene-ethylene block copolymers; propylene-ethylene-butene-1 random copolymers; propylene-ethylene-butene-1 block copolymers; propylene-ethylene-1-pentene random copolymers; propylene-ethylene-1-pentene block copolymers; propylene-hexene-1 random copolymers; propylene-hexene-1 block copolymers; propylene-ethylene-hexene-1 random copolymers; propylene-ethylene-4-methylpentene-1 random copolymers; propylene-ethylene-5-ethylidene-2-norbornene copolymers; propylene-ethylene-5-methylene-2-norbornene copolymers; propylene-ethylene-1,4-hexadiene copolymers; propylene-styrene copolymers; propylene-maleic anhydride copolymers; and propylene/(meth)acrylate copolymers.

These propylene-based resins can be used alone or in a suitable combination of two or more.

Among the above, preferable are polypropylene homopolymers, propylene-based propylene-ethylene random copolymers, and propylene-based propylene-ethylene block copolymers. The amount of propylene units in the copolymer is preferably 70 to less than 100 wt%, and more preferably 80 to less than 100 wt%.

These polypropylene-based resins can be produced according to known methods. A variety of known methods can be employed, such as slurry polymerization using a hydrocarbon solvent such as hexane, heptane, or the like; bulk polymerization using liquid propylene as a solvent; and vapor-phase polymerization. Examples of catalysts for use in these methods may be those generally used, such as Ziegler-Natta catalysts; catalyst systems containing combinations of alkylaluminum compounds (triethylaluminum, diethylaluminum chloride, etc.) with catalysts in which transition metal compounds (e.g., titanium halides such as titanium trichloride and titanium tetrachloride) are deposited on supports containing magnesium chloride or a like magnesium halide as a principal component; and metallocene catalysts referred to as Kaminsky catalysts.

The melt flow rate (hereinafter abbreviated as "MFR"; JIS K 6758-1981) of the polypropylene-based resin may be suitably selected according to its application or the molding method employed, but is preferably 0.1 to 200 g/10 min, more preferably 0.3 to 150 g/10 min, and particularly preferably 0.5 to 100 g/10 min.

Examples of thermoplastic resins usable in the above-mentioned blend polymers include low-pressure polyethylene, medium-pressure polyethylene, high-pressure polyethylene, linear low-density polyethylene, polybutene-1, poly(4-methylpentene-1), etc.

### β-Crystal Nucleating Agent

Examples of the β-crystal nucleating agent of the invention include amide compounds represented by Formulae (2) and (3) above; tetraoxaspiro compounds; quinacridones; iron oxide with nano-scale size; alkali metal or alkaline earth metal salts of carboxylic acids, such as potassium 12-hydroxystearate, magnesium benzoate, magnesium succinate, magnesium phthalate, etc.; aromatic sulfonic acid compounds such as sodium benzenesulfonate, sodium naphthalenesulfonate, etc.; diesters or triesters of dibasic or tribasic carboxylic acids; phthalocyanine pigments such as phthalocyanine blue, etc.; binary compounds containing a component from the group consisting of organic dibasic acids and a component from the group consisting of oxides, hydroxides, and salts of the Group IIA metals of the periodic table; and compositions containing cyclic phosphorus compounds and magnesium compounds. These components can be used alone or in a suitable combination of two or more.

Among the above, preferable as the β-crystal nucleating agent are amide compounds represented by Formulae (2) and (3) above.

In Formula (2), n is an integer of 2 to 6, and preferably 2 to 4; R² is a C2-C18, preferably C3-C8 saturated or unsaturated aliphatic polycarboxylic acid residue, a C3-C18, preferably C5-C8 alicyclic polycarboxylic acid residue, or a C6-C18, preferably C6-C12 aromatic polycarboxylic acid residue; and two to six (preferably two to four) R³s are the same or different and are each a C5-C30, preferably C5-C12 saturated or unsaturated aliphatic amine residue, a C5-C30, and preferably C5-C12 alicyclic amine residue, or a C6-C30, and preferably C6-C12 aromatic amine residue.

A combination of R² represented by any of Formulae (a) to (d) and R³ represented by Formula (e) is preferred in order to achieve the effects of the invention. A combination of R² represented by any of Formulae (a) to (c) and R³ represented by Formula (e) is particularly preferred. 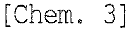 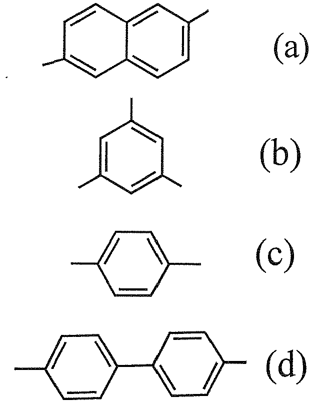 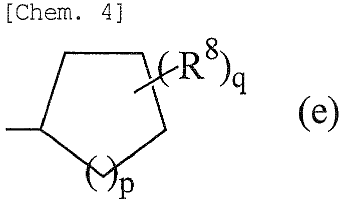 wherein p is an integer of 1 to 8; q is an integer of 0 to 2; and R⁸ is a C1-C4 alkyl group.

In Formula (e) above, p is preferably 1 to 4, and R⁸ is preferably a C1-C2 alkyl group.

The term "polycarboxylic acid residue" means a group remaining after the removal of all of the carboxy groups from the polycarboxylic acid, and the number of carbon atoms represents the total number of carbon atoms of the polycarboxylic acid residue. The term "amine residue" means a group remaining after the removal of the amino groups from the monoamine, and the number of carbon atoms represents the total number of carbon atoms of the amine residue.

Specific examples of the amide compounds represented by Formula (2) include:
N,N'-dicyclohexyl-1,4-cyclohexanedicarboxylic amide;
N,N'-di(2-methylcyclohexyl)-1,4-cyclohexanedicarboxylic amide;
N,N'-di(4-methylcyclohexyl)-1,4-cyclohexanedicarboxylic amide;
N,N'-di(2,3-dimethylcyclohexyl)-1,4-cyclohexanedicarboxylic amide;
N,N'-dicyclohexyl-terephthalamide;
N,N'-di(2-methylcyclohexyl)-terephthalamide;
N,N'-di(3-methylcyclohexyl)-terephthalamide;
N,N'-di(4-methylcyclohexyl)-terephthalamide;
N,N'-di(2,3-dimethylcyclohexyl)-terephthalamide;
N,N'-di(cycloocthyl)-terephthalamide;
N,N'-dicyclohexyl-2,6-naphthalenedicarboxylic amide;
N,N'-dicyclopentyl-2,6-naphthalenedicarboxylic amide;
N,N'-dicyclooctyl-2,6-naphthalenedicarboxylic amide;
N,N'-dicyclododecyl-2,6-naphthalenedicarboxylic amide;
N,N'-di(2-methylcyclohexyl)-2,6-naphthalenedicarboxylic amide;
N,N'-di(3-methylcyclohexyl)-2,6-naphthalenedicarboxylic amide;
N,N'-di(4-methylcyclohexyl)-2,6-naphthalenedicarboxylic amide;
N,N'-di(2,3-dimethylcyclohexyl)-2,6-naphthalenedicarboxylic amide;
N,N'-di(cyclooctyl)-2,6-naphthalenedicarboxylic amide;
N,N'-dicyclohexyl-2,7-naphthalenedicarboxylic amide;
N,N'-di(2,3-dicyclohexyl)-2,7-naphthalenedicarboxylic amide;
N,N'-dicyclohexyl-4,4'-biphenyldicarboxylic amide;
N,N'-dicyclopentyl-4,4'-biphenyldicarboxylic amide;
N,N'-dicyclooctyl-4,4'-biphenyldicarboxylic amide;
N,N'-dicyclododecyl-4,4'-biphenyldicarboxylic amide;
N,N'-di(2-methylcyclohexyl)-4,4'-biphenyldicarboxylic amide;
N,N'-di(3-methylcyclohexyl)-4,4'-biphenyldicarboxylic amide;
N,N'-di(4-methylcyclohexyl)-4,4'-biphenyldicarboxylic amide;
N,N'-di(2,3-dimethylcyclohexyl)-4,4'-biphenyldicarboxylic amide;
N,N'-di(cyclooctyl)-4,4'-biphenyldicarboxylic amide;
N,N'-dicyclohexyl-2,2'-biphenyldicarboxylic amide;
N,N'-diphenylhexanediamide;
N,N'-bis(p-methylphenyl)hexanediamide;
N,N'-bis(p-ethylphenyl)hexanediamide;
N,N'-bis(4-cyclohexylphenyl)hexanediamide;
dianilide adipate;
dianilide suberate;
trimesic acid tri(cyclohexylamide);
trimesic acid tri-t-butyramide;
trimesic acid tri(2-methylcyclohexylamide);
trimesic acid tri(4-methylcyclohexylamide);
trimesic acid tri(2-ethylcyclohexylamide);
trimesic acid tri(4-ethylcyclohexylamide);
trimesic acid tri(4-n-propylcyclohexylamide);
trimesic acid tri(4-isopropylcyclohexylamide);
trimesic acid tri(4-n-butylcyclohexylamide);
trimesic acid tri(4-isobutylcyclohexylamide);
trimesic acid tri(4-t-butylcyclohexylamide);
trimesic acid tri(4-sec-butylcyclohexylamide);
trimesic acid tri(2,3-dimethylcyclohexylamide);
trimesic acid tri(2,4-dimethylcyclohexylamide);
trimesic acid tri(benzylamide);
trimesic acid tri(cycloheptyl);
trimesic acid tri(3-methylcyclohexylamide);
trimesic acid tri(cyclododecylamide);
trimesic acid tri(1,1,3,3-tetramethylbutyramide);
trimesic acid tri(S(+)-1-cyclohexylethylamide);
trimesic acid tri(R(+)-1-cyclohexylethylamide); and
trimesic acid tri(cyclooctylamide).

Preferred among the above are:
N,N'-dicyclohexyl-terephthalamide;
N,N'-di(2-methylcyclohexyl)-terephthalamide;
N,N'-di(3-methylcyclohexyl)-terephthalamide;
N,N'-di(4-methylcyclohexyl)-terephthalamide;
N,N'-di(2,3-dimethylcyclohexyl)-terephthalamide;
N,N'-di(cycloocthyl)-terephthalamide;
N,N'-dicyclohexyl-2,6-naphthalenedicarboxylic amide;
N,N'-di(2-methylcyclohexyl)-2,6-naphthalenedicarboxylic amide;
N,N'-di(3-methylcyclohexyl)-2,6-naphthalenedicarboxylic amide;
N,N'-di(4-methylcyclohexyl)-2,6-naphthalenedicarboxylic amide;
N,N'-di(2,3-dimethylcyclohexyl)-2,6-naphthalenedicarboxylic amide;
N,N'-di(cyclooctyl)-2,6-naphthalenedicarboxylic amide;
N,N'-dicyclohexyl-4,4'-biphenyldicarboxylic amide;
N,N'-di(2-methylcyclohexyl)-4,4'-biphenyldicarboxylic amide;
N,N'-di(3-methylcyclohexyl)-4,4'-biphenyldicarboxylic amide;
N,N'-di(4-methylcyclohexyl)-4,4'-biphenyldicarboxylic amide;
N,N'-di(2,3-dimethylcyclohexyl)-4,4'-biphenyldicarboxylic amide;
N,N'-di(cyclooctyl)-4,4'-biphenyldicarboxylic amide;
trimesic acid tri(cyclohexylamide);
trimesic acid tri(2-methylcyclohexylamide);
trimesic acid tri(3-methylcyclohexylamide);
trimesic acid tri(4-methylcyclohexylamide);
trimesic acid tri(2,3-dimethylcyclohexylamide); and
trimesic acid tri(cyclooctylamide),
because these amide compounds can particularly enhance the effects of the invention.

In Formula (3) above, R⁴, R⁵, R⁶, and R⁷ are the same or different and are each a hydrogen atom, a C1-C20, preferably C1-C18 alkyl group, a C5-C20, preferably C5-C14 optionally substituted cycloalkyl group, or a C6-C20, preferably C6-C14 optionally substituted aryl group. Specific examples of the alkyl include methyl, ethyl, butyl, hexyl, octyl, dodecyl, octadecyl, etc.; specific examples of the optionally substituted cycloalkyl include cyclopentyl, cyclohexyl, cyclooctyl, 4-t-butylcyclohexyl, 2,4-di-t-butylcyclohexyl, 1-adamantyl, etc.; and specific examples of the optionally substituted aryl include phenyl, 1-naphthyl, 4-t-butylphenyl, 2,4-di(t-butyl)phenyl, etc.

Moreover, R³ and R⁴ or R⁵ and R⁶ may be taken together to form an alkylene group. The nitrogen-containing ring thereby formed together with the nitrogen atom is preferably a five- to eight-membered ring (including the nitrogen). Specific examples of such rings include pyrrolidine, piperidine, hexamethyleneimine, etc.

Specific examples of the amide compounds represented by Formula (3) above include:
3,9-bis[4-(N-cyclohexylcarbamoyl)phenyl]-2,4,8,10-tetraoxaspiro[5.5]undecane;
3,9-bis{4-[N-(4-t-butylcyclohexyl)carbamoyl]phenyl}-2,4,8,10-tetraoxaspiro[5.5]undecane;
3,9-bis{4-[N-(2,4-di-t-butylcyclohexyl)carbamoyl]phenyl}-2,4,8,10-tetraoxaspiro[5.5]undecane;
3,9-bis{4-[N-(1-adamantyl)carbamoyl]phenyl}-2,4,8,10-tetraoxaspiro[5.5]undecane;
3,9-bis[4-(N-phenylcarbamoyl)phenyl]-2,4,8,10-tetraoxaspiro[5.5]undecane;
3,9-bis{4-[N-(4-t-butylphenyl)carbamoyl]phenyl}-2,4,8,10-tetraoxaspiro[5.5]undecane;
3,9-bis{4-[N-(2,4-di-t-butylphenyl)carbamoylphenyl]-2,4,8,10-tetraoxaspiro[5.5]undecane;
3,9-bis{4-[N-(1-naphthyl)carbamoyl]phenyl}-2,4,8,10-tetraoxaspiro[5.5]undecane;
3,9-bis[4-(N-n-butylcarbamoyl)phenyl]-2,4,8,10-tetraoxaspiro[5.5]undecane;
3,9-bis{4-(N-n-hexylcarbamoyl)phenyl]-2,4,8,10-tetraoxaspiro[5.5]undecane;
3,9-bis[4-(N-n-dodecylcarbamoyl)phenyl]-2,4,8,10-tetraoxaspiro[5.5]undecane;
3,9-bis[4-(N-n-octadecylcarbamoyl)phenyl]-2,4,8,10-tetraoxaspiro[5.5]undecane;
3,9-bis(4-carbamoylphenyl)-2,4,8,10-tetraoxaspiro[5.5]undecane;
3,9-bis[4-(N,N-dicyclohexylcarbamoyl)phenyl]-2,4,8,10-tetraoxaspiro[5.5]undecane;
3,9-bis[4-(N,N-diphenylcarbamoyl)phenyl]-2,4,8,10-tetraoxaspiro[5.5]undecane;
3,9-bis[4-(N-n-butyl-N-cyclohexylcarbamoyl)phenyl]-2,4,8,10-tetraoxaspiro[5.5]undecane;
3,9-bis[4-(N-n-butyl-N-phenylcarbamoyl)phenyl]-2,4,8,10-tetraoxaspiro[5.5]undecane;
3,9-bis[4-(1-pyrrolidinylcarbonyl)phenyl]-2,4,8,10-tetraoxaspiro[5.5]undecane;
3,9-bis[4-(1-piperidinylcarbonyl)phenyl]-2,4,8,10-tetraoxaspiro[5.5]undecane; etc.

Preferred among the above are:
3,9-bis[4-(N-cyclohexylcarbamoyl)phenyl]-2,4,8,10-tetraoxaspiro[5.5]undecane;
3,9-bis{4-[N-(1-adamantyl)carbamoyl]phenyl}-2,4,8,10-tetraoxaspiro[5.5]undecane;
3,9-bis[4-(N-phenylcarbamoyl)phenyl]-2,4,8,10-tetraoxaspiro[5.5]undecane;
3,9-bis[4-(N-n-octadecylcarbamoyl)phenyl]-2,4,8,10-tetraoxaspiro[5.5]undecane; and
3,9-bis(4-carbamoylphenyl)-2,4,8,10-tetraoxaspiro[5.5]undecane,
because these amide compounds can particularly enhance the effects of the invention.

The amount of the β-crystal nucleating agent used depends on the type of the β-crystal nucleating agent, but is preferably 0.0001 to 1 part by weight, more preferably 0.001 to 1 part by weight, still more preferably 0.003 to 0.7 parts by weight, and particularly preferably 0.01 to 0.5 parts by weight, per 100 parts by weight of the polypropylene-based resin. Within this range, the effects of the invention can be particularly enhanced.

If the polypropylene-based resin composition is a masterbatch using a high content of the amide compound, the amount of the amide compound may exceed the above-mentioned range. Even in this case, however, it is preferred to adjust the masterbatch by dilution when in use so that the amount of the β-crystal nucleating agent is within the above-mentioned range, in order to obtain the molded article of the invention.

### Fatty Acid Metal Salt

The fatty acid metal salt of the invention is a compound represented by Formula (1) above, wherein R¹ is a C7-C31, preferably C7-C21, and particularly preferably C11-C21 alkyl group; a C7-C31, preferably C7-C21, and particularly preferably C11-C21 alkenyl group; or a C6-C30, preferably C6-C21 optionally substituted cycloalkyl group, each of the alkyl, alkenyl, and cycloalkyl groups optionally having one or two hydroxy groups, and preferably having one hydroxy group; m is an integer of 2 or 3; and M is a divalent or trivalent metal.

The number of carbon atoms of the optionally substituted cycloalkyl group represents the total number of carbon atoms including the carbon atom(s) of the substituent(s). Examples of substituents for the optionally substituted cycloalkyl group include, but are not limited to, alkyl, alkoxy, etc. The number of the substituents is preferably 1 to 6, and more preferably 1 to 4.

Specific examples of M include metals that can form divalent cations, such as calcium, magnesium, strontium, barium, nickel, zinc, copper, iron, tin, etc.; and metals that can form trivalent cations, such as aluminum, iron, etc. Calcium, magnesium, zinc, or aluminum is preferred. Since M forms a salt with a fatty acid, it is believed to be present as cations. These metals may be used alone or as a mixture of two or more.

It is preferred that the fatty acid metal salt is dissolved in the polypropylene-based resin, but may also be finely and homogeneously dispersed in the polypropylene-based resin.

The amount of the fatty acid metal salt used depends on the type and amount of the amide compound(s), or the type of the polypropylene-based resin, but is preferably 0.001 to 1 part by weight, more preferably 0.005 to 0.7 parts by weight, and particularly preferably 0.01 to 0.5 parts by weight, per 100 parts by weight of the polypropylene-based resin.

The amide compound represented by Formula (2) or (3) above and the fatty acid metal salt are used in a ratio (by weight) of the amide compound to the fatty acid metal salt of 1 : 0.1 to 10, and preferably 1 : 0.3 to 7, in order to achieve the effects of the invention more efficiently.

Specific examples of compounds that can introduce a C7-C31 alkyl group include caprylic acid, nonanoic acid, capric acid, undecanoic acid, lauric acid, tridecanoic acid, myristic acid, pentadecanoic acid, palmitic acid, heptadecanoic acid, stearic acid, nonadecanoic acid, icosanoic acid, henicosanoic acid, docosanoic acid, tricosanoic acid, tetracosanoic acid, pentacosanoic acid, hexacosanoic acid, heptacosanoic acid, octacosanoic acid, nonacosanoic acid, triacontanoic acid, hentriacontanoic acid, dotriacontanoic acid, 12-hydroxystearic acid, montanic acid etc.

Specific examples of compounds that can introduce a C7-C31 alkenyl group include octenoic acid, nonenoic acid, decenoic acid, undecenoic acid, dodecenoic acid, tridecenoic acid, tetradecenoic acid, pentadecenoic acid, hexadecenoic acid, oleic acid, linoleic acid, linolenic acid, nonadecenoic acid, icosenoic acid, henicosenoic acid, docosenoic acid, tricosenoic acid, tetracosenoic acid, pentacosenoic acid, hexacosenoic acid, heptacosenoic acid, octacosenoic acid, nonacosenoic acid, etc.

Specific examples of compounds that can introduce the C6-C30 optionally substituted cycloalkyl group include 2-methylcyclopentane carboxylic acid, cyclohexane carboxylic acid, 2-methylcyclohexane carboxylic acid, 4-methylcyclohexane carboxylic acid, 2,3-dimethylcyclohexane carboxylic acid, cycloheptane carboxylic acid, cyclooctane carboxylic acid, and cyclododecene carboxylic acid.

Among the above, preferable as compounds that can introduce the alkyl or alkenyl group are octyl acid, decanoic acid, lauric acid, myristic acid, palmitic acid, stearic acid, arachidic acid, behenic acid, oleic acid, and 12-hydroxystearic acid.

These aliphatic monocarboxylic acids may be used alone or as a mixture of two or more.

### Preferable Fatty Acid Metal Salts

The fatty acid metal salt is a compound that is used synergistically with the β-crystal nucleating agent (an amide compound) for orienting the polypropylene chain, and is important for achieving a higher degree of orientation. Specifically, it is important that the fatty acid metal salt be present in the polypropylene-based resin composition in Steps (i) and (ii) described later. This is because, when the amide compound represented by Formula (2) or (3) is dissolved in the polypropylene-based resin composition and subsequently recrystallized, the presence of the fatty acid metal salt allows the formation of needle crystals of good quality having a high aspect ratio and the like, thus exerting a great influence on achieving the effects of the invention.

Examples of preferable fatty acid metal salts include calcium n-octanoate, calcium 2-ethylhexanoate, calcium decanoate, calcium laurate, calcium myristate, calcium palmitate, calcium stearate, calcium arachidate, calcium behenate, calcium oleate, calcium 12-hydroxystearate, magnesium n-octanoate, magnesium 2-ethylhexanoate, magnesium decanoate, magnesium laurate, magnesium myristate, magnesium palmitate, magnesium stearate, magnesium arachidate, magnesium behenate, magnesium oleate, magnesium 12-hydroxystearate, zinc n-octanoate, zinc 2-ethylhexanoate, zinc decanoate, zinc laurate, zinc myristate, zinc palmitate, zinc stearate, zinc arachidate, zinc behenate, zinc oleate, zinc 12-hydroxystearate, aluminum di(n-octanoate), aluminum tri(n-octanoate), aluminum di(2-ethylhexanoate), aluminum tri(2-ethylhexanoate), aluminum di(decanoate), aluminum tri(decanoate), aluminum dilaurate, aluminum trilaurate, aluminum dimyristate, aluminum trimyristate, aluminum dipalmitate, aluminum tripalmitate, aluminum distearate, aluminum tristearate, aluminum diarachidate, aluminum triarachidate, aluminum dibehenate, aluminum tribehenate, aluminum dioleate, aluminum trioleate, aluminum di(12-hydroxystearate), aluminum tri(12-hydroxystearate), etc.

Note that di- or tri-fatty acid aluminum salts may contain mono-fatty acid aluminum salts.

These fatty acid metal salts can be used alone or in a suitable combination of two or more.

The polypropylene-based resin composition of the invention may further contain known polyolefin modifiers, depending on its purpose or application, insofar as the effects of the invention can be attained.

Examples of polyolefin modifiers include the various additives listed in "Tables of Positive Lists of Additives" (October, 1990), edited by Japan Hygienic Olefin And Styrene Plastics Association. More specific examples of modifiers include stabilizers such as epoxy compounds, nitrogen compounds, phosphorus compounds, and sulfur compounds; UV absorbers such as benzophenone compounds and benzotriazole compounds; antioxidants such as phenol compounds, phosphorous ester compounds, and sulfur compounds; surfactants; lubricants such as paraffin, wax, and other aliphatic hydrocarbons, C8 to C22 higher fatty acids, C8-C18 fatty acids, C8 to C22 aliphatic alcohols, polyglycols, esters of C4 to C22 higher fatty acids and C4 to C18 aliphatic monohydric alcohols, C8 to C22 higher fatty acid amides, silicone oils, and rosin derivatives; fillers such as talc, hydrotalcite, mica, zeolite, perlite, diatomaceous earth, calcium carbonate, and glass fibers; neutralizers; antacids; foaming agents; foaming aids; polymer additives; fluorescent brightening agents; plasticizers; molecular weight regulators such as radical generators; crosslinking agents; crosslinking accelerators; antistatic agents; anti-fogging agents; polymer alloy components such as polystyrene and rubbers such as block SBRs, random SBRs, and their hydrides; flame retardants; dispersants; dyes; processing aids; anti-blocking agents; etc.

These modifiers can be used alone or in a suitable combination of two or more.

### Layers Having Orientations (Layers A and B)

The layers having orientations (the layers A and B) of the invention mean layers in which the polypropylene chains (the c-axis) are oriented in certain directions. The layers having different orientations are present in one single molded article of the invention. These layers having different orientations are directly or indirectly stacked. The term "indirectly" means that another layer (e.g., an amorphous layer) may be present between the two layers. In practice, another layer is present between the two layers, even if it is present in small amounts.

As stated above, since the polypropylene chains are oriented in certain directions, the molded article is considered to have highly ordered crystal structures, each including crystalline lamellae stacked such that the direction of regularity of the long period of the crystalline lamellae is constant.

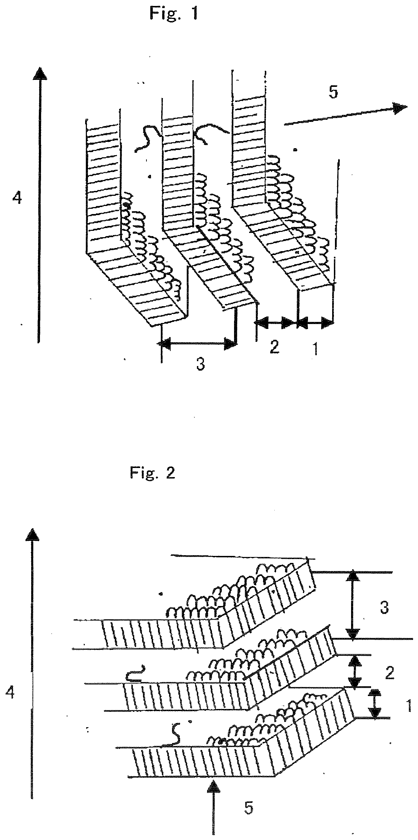

Each of the highly ordered crystalline structures includes crystalline lamellae of the polypropylene-based polymer and amorphous regions. The crystalline lamellae are stacked in layers, with an amorphous region being present between crystalline lamellae. The direction of regularity of the long period of the crystalline lamellae is considered to be constant (Figs. 1 and 2). Here, the long period of the crystalline lamellae represents the distance between the centroids of the crystalline lamellae; and the direction of regularity of the long period represents the direction in which the crystalline lamellae are regularly stacked. Because each of the polypropylene-based polymer phases has such a highly ordered crystal structure, the regularity of the phase as a whole is considered to be constant.

The orientations of the polypropylene chains in the polypropylene-based resin molded article of the invention can be determined by examining the molded article under a polarizing microscope, as will be described later in the Examples.

Specifically, when the polypropylene-based resin molded article is examined with a polarizing microscope under crossed Nicols using a sensitive tint plate, the sample is placed on the microscope so that the axis of the sensitive tint plate with a greater refractive index corresponds to the direction of the resin flow during molding of the polypropylene-based resin composition. When a color in the range of "blue-bluish green-green" is observed, the direction of the orientation of the polypropylene chain (the c-axis), which is considered to be the direction in which the regularity of the long period of the crystalline lamellae is formed, is shown to be substantially parallel to the direction of the resin flow, thus indicating that the molded article has a positive birefringence.

When a color in the range of "orange-yellow" is observed, the direction of the direction of the polypropylene chain (the c-axis), which is considered to be the direction in which the regularity of the long period of the crystalline lamellae is formed, is shown to be substantially perpendicular to the direction of the resin flow, thus indicating that the molded article has a negative birefringence.

The terms "perpendicular" and "parallel" as used in the specification and the claims do not strictly mean "perpendicular" and "parallel", respectively; rather, the term "parallel" to the resin flow means that a color in the range of "blue-bluish green-green" is observed, and the term "perpendicular" to the resin flow means that a color in the range of "orange-yellow" is observed, as a result of an evaluation by examining the sample with a polarizing microscope.

In the polypropylene-based resin molded article of the present invention, the layers whose polypropylene chains have different orientations have a layered structure including at least the layer A and layer B. Of the layers whose polypropylene chains have different orientations, it is preferred that the layer A is a core layer, and the layer B is a skin layer. As used herein, the "skin layer" means an outermost layer (or a surface layer) of the oriented layers, and the "core layer" means an inner layer present in a portion closer to the center of the molded article than the skin layer.

When the polypropylene-based resin layers whose polypropylene chains have different orientations are individually a skin layer and a core layer, the invention includes the following embodiments according to the molding conditions and the propylene-based resin composition, in which:
(A) the polypropylene chain in the skin layer is oriented in a direction parallel to the direction of a resin flow during molding of a polypropylene-based resin composition, and the polypropylene chain in the core layer is oriented in a direction perpendicular to the direction of the resin flow; and
(B) the polypropylene chain in the skin layer is oriented in a direction perpendicular to the direction of a resin flow during the production of a polypropylene-based resin composition, and the polypropylene chain in the core layer is oriented in a direction parallel to the direction of the resin flow.

These embodiments correspond to the following:
in the system (A), the skin layer has a positive birefringence, and the core layer has a negative birefringence; and
in the system (B), the skin layer has a negative birefringence, and the core layer has a positive birefringence.

As stated above, when one of the skin layer and core layer has a positive birefringence, and the other layer has a negative birefringence, the orientation of the polypropylene chain of each layer is different.

Each of the polypropylene-based resin layers whose polypropylene chains have different orientations has a maximum absolute value of birefringence of 0.005 or more, preferably 0.007 or more, and more preferably 0.009 or more. The birefringences of these layers are different from each other, one being positive and the other being negative.

The molded article of the invention has a thickness of preferably 0.5 mm or more, and more preferably 1 mm or more. These ranges of thickness are preferred because they can enhance the effects of the invention, e.g., they easily impart orientation to the molded article, and have good effects on the physical properties of the molded article.

These ranges of thickness of the molded article are also recommended in view of its relationship with the method described below.

### Method for Producing Polypropylene-Based Resin Molded Article

The method for producing a polypropylene-based resin molded article of the invention includes Steps (i) to (iii) given below, wherein, in Step (i) or (ii), the fatty acid metal salt of the invention is present in the polypropylene-based resin composition. By meeting these requirements, the method can yield a molded article that can attain the effects of the invention more effectively.

The description of the method also applies to the method for molding the polypropylene-based resin composition of the invention.

Step (i): dissolving a β-crystal nucleating agent in a polypropylene-based resin by heating, to produce a molten polypropylene-based resin composition;

Step (ii): cooling the molten polypropylene-based resin composition to deposit crystals of the β-crystal nucleating agent; and

Step (iii): melting the cooled polypropylene-based resin composition at a temperature equal to or higher than a melting point of the polypropylene-based resin, and at which the β-crystal nucleating agent is not dissolved by heating, and subsequently molding the resulting composition.

In Step (i) or (ii), the fatty acid metal salt of the invention is present as an essential component.

The temperature during the molding in Step (iii) is preferably 125°C or lower, more preferably 20 to 125°C, and particularly preferably 80 to 125°C.

In Step (i), it is very important that a β-crystal nucleating agent (preferably at least one amide compound represented by Formula (2) or (3) above) be dissolved by heating in a polypropylene-based resin. This can be done using a known apparatus. Step (i) involves dissolving the β-crystal nucleating agent by heating, and bringing the polypropylene-based resin composition to a molten state.

The expression "dissolving a β-crystal nucleating agent in a polypropylene-based resin by heating", as used in the specification and the claims, means dissolving substantially the total amount of the β-crystal nucleating agent. If the β-crystal nucleating agent is not sufficiently dissolved by this operation, the effects of the invention cannot be sufficiently attained.

As will be described in the Examples below, when the β-crystal nucleating agent is dissolved by heating, undissolved β-crystal nucleating agent is not observed during a visual inspection of the molten polypropylene-based resin composition, and the molten polypropylene-based resin composition is transparent. The use of this method allows confirmation of the dissolution of substantially the total amount of the molten polypropylene-based resin composition.

Specific examples of Step (i) include the following methods:
(1) A method in which a polypropylene-based resin, a β-crystal nucleating agent, a fatty acid metal salt, and, optionally, polypropylene modifiers, are dry blended using a mixer such as a Henschel mixer, ribbon blender, drum mixer, or the like; the dry blend is subsequently melt-kneaded in a melt kneader employed in the art, e.g., a single-screw extruder, twinscrew extruder, roll, Brabender plastograph, Banbury mixer, or kneader blender, to dissolve the β-crystal nucleating agent in the polypropylene-based resin at a predetermined resin temperature; and, while being maintained in a molten state, the molten composition is advanced to Step (ii).
(2) A method in which a β-crystal nucleating agent, a fatty acid metal salt, and, optionally, polypropylene modifiers, are directly added in solid or liquid form and dissolved in a molten polypropylene-based resin at a predetermined resin temperature using a melt kneader; and, while being maintained in a molten state, the molten composition is advanced to Step (ii).
(3) A method in which a masterbatch containing high concentrations of a β-crystal nucleating agent, a fatty acid metal salt, and, optionally, polypropylene modifiers, is added and dissolved in a molten polypropylene-based resin at a predetermined resin temperature using a melt kneader; and, while being maintained in a molten state, the molten composition is advanced to Step (ii).

The above-mentioned masterbatch may be adjusted to contain high concentrations of additives, and applied to the method (1) given above for Step (i).

In the examples of methods (1) to (3) above, the β-crystal nucleating agent is dissolved by heating, and then the molten polypropylene-based resin composition is advanced to Step (ii) while being maintained in a molten state; however, the following procedures can also be employed: The molten polypropylene-based resin composition is cooled once and pelletized. The β-crystal nucleating agent is dissolved by heating in the polypropylene-based resin again at a predetermined processing temperature, and, while being maintained in a molten state, the molten composition is advanced to Step (ii).

Further, in order to sufficiently dissolve the β-crystal nucleating agent by heating, it is preferred to take, for example, the following measures: elevating the resin temperature in Step (i) while considering the pyrolysis temperature of the polypropylene-based resin; and suitably adjusting the processing time (the residence time), the rotation speed, shape, and the like of the screw(s) of the heating mixer (e.g., a kneader) in Step (i).

Specifically, the resin temperature during the dissolution of the β-crystal nucleating agent by heating in Step (i) may be a measured value obtained by the method described in the "Dissolution Temperature" section below in the Examples, or a temperature obtained by visually determining the dissolution of the β-crystal nucleating agent using the heating mixer actually used. The temperature obtained by the former method is typically higher than that obtained by the latter. This is believed to be due to the fact that the latter method is conducted under flow by mixing, thus the dispersion of the β-crystal nucleating agent into the polypropylene-based resin is promoted.

More specifically, as described in the "dissolution temperature" section below, the resin temperature is preferably equal to or 40°C higher than the dissolution temperature, and more preferably, equal to or 5 to 40°C higher than the dissolution temperature.

In Step (i), it is very important to dissolve substantially the total amount of the β-crystal nucleating agent into the polypropylene-based resin. The "dissolution temperature" described below can be employed as the resin temperature.

The processing time in Step (i) depends on the type, capabilities, and the like of the heating mixer; however, a shorter processing time is preferable, as long as the β-crystal nucleating agent can be dissolved.

In Step (ii), the molten polypropylene-based resin composition is cooled to a temperature at which crystals of the β-crystal nucleating agent are deposited. An important requirement in this step is to incorporate the fatty acid metal salt, in order to produce needle crystals of good quality.

The resin temperature during the cooling in Step (ii) is equal to or lower than a temperature at which the β-crystal nucleating agent (an amide compound) is deposited from the polypropylene-based resin composition; preferably equal to or - 150°C lower than the deposition temperature, and more preferably equal to or -200°C lower than the deposition temperature. More specifically, the resin temperature is preferably 80°C or lower, and more preferably 40°C or lower, i.e., within the range of temperatures that is practically sufficient to achieve the object of the invention.

Almost any known cooling method can be used as the cooling method; examples of such methods include immersing the composition in a cooling medium such as water; and air-cooling the composition with a blower. It is most preferred that at this time, the β-crystal nucleating agent is crystallized in the polypropylene-based resin and deposited as needle crystals. The needle crystals of the β-crystal nucleating agent can be readily observed according to an optical technique, using, e.g., a polarizing microscope.

It is very important that the crystals (needle crystals of good quality) of the β-crystal nucleating agent be finely and homogeneously dispersed in the polypropylene-based resin, in order to attain the effects of the invention more effectively. Performing the above-mentioned Steps (i) and (ii) is the most simple and efficient method to achieve this objective.

It should be noted that, although Step (iii) can be performed immediately when needle crystals (preferably fine needle crystals) of the β-crystal nucleating agent are available, it is preferred that the commercial β-crystal nucleating agent is homogeneously dispersed in the polypropylene-based resin as a pre-treatment before Step (iii).

Step (iii) involves utilizing the polypropylene-based resin composition in which the crystals (specifically, needle crystals) of the β-crystal nucleating agent are homogenously dispersed and oriented in certain directions, to form a layer of the polypropylene-based resin whose polypropylene chain (the c-axis) is oriented in a certain direction, and a layer of the polypropylene-based resin whose polypropylene chain is oriented in a direction different from the orientation of the above-mentioned layer. In other words, Step (iii) involves forming a propylene-based polymer phase having a highly ordered crystal structure in which crystalline lamellae are stacked such that the direction of regularity of the long period of the crystalline lamellae is constant, and forming a propylene-based polymer phase having a highly ordered crystal structure in which crystalline lamellae are stacked in a direction different from the direction of regularity of the long period of the above-mentioned crystalline lamellae.

The layer of the polypropylene-based resin whose polypropylene chain (the c-axis) is oriented in a different direction is formed by controlling the crystals of the β-crystal nucleating agent to be oriented in the direction of the resin flow, and by utilizing the cooling gradient (the difference in cooling rate). For this reason, the control of the resin flow and the temperature control are important features in Step (iii).

The temperature control in Step (iii) involves bringing the polypropylene-based resin composition to a molten state at a resin temperature equal to or higher than a melting point of the polypropylene-based resin, and at which the β-crystal nucleating agent is not dissolved by heating; and subsequently molding the resulting composition. The temperature during the molding is preferably 125°C or lower, more preferably 20 to 125°C, and particularly preferably 80 to 125°C.

Typically, the β-crystal nucleating agent of the invention has a melting point higher than that of the polypropylene-based resin; thus, the polypropylene-based resin melts first, and then the β-crystal nucleating agent (solid) dissolves in the molten polypropylene-based resin.

The expression "temperature equal to or higher than a melting point of the polypropylene-based resin, and at which the β-crystal nucleating agent is not dissolved by heating", as used above, means the range of temperatures at which the needle crystals of the β-crystal nucleating agent are substantially present in the molten polypropylene-based resin composition. The expression "[temperature] at which the β-crystal nucleating agent is not dissolved by heating" denotes, in other words, a temperature lower than the temperature at which the β-crystal nucleating agent is dissolved by heating, i.e., a temperature lower than the temperature at which substantially the total amount of the β-crystal nucleating agent is dissolved.

Typically, in order to achieve the above-mentioned range of temperatures during molding, the temperature of the mold, chill roll, or the like used for molding is set to the above-mentioned range of temperatures; however, it may sometimes be necessary to suitably adjust the temperature.

With respect to the control of the resin flow in Step (iii), when a known molding method (using a molding machine) is employed, resin flow basically occurs during the molding, causing the needle crystals of the amide compound to be oriented in the direction of the resin flow. When a higher degree of orientation is desired, selection of a method whereby the resin flow can be controlled as desired is recommended. An example of such a method is to vary the type of the molding machine or the mold shape to enable easy application of a greater shearing force in a desired direction.

The term "molding" above means that the molten composition is molded into a desired shape or form (e.g., a film, a sheet, a bottle, a case, etc.) of a polypropylene-based resin molded article by employing a suitable molding method such as pressure molding, vacuum molding, compression molding, extrusion-thermoforming, extrusion molding, injection molding, or the like, under conditions such that the above-mentioned temperature control can be accomplished.

### EXAMPLES

The present invention will be described in greater detail with reference to the following Examples. Evaluation methods employed in the Examples and Comparative Examples are as follows.

### [Melting Point of Polypropylene-Based Resin]

The melting point was measured according to JIS K 7121(1987), using a differential scanning calorimeter ("Diamond DSC" from Perkin Elmer, Inc.). About 10 mg of the polypropylene-based resin was placed in the calorimeter and maintained at 30°C for 3 minutes; the sample was subsequently heated at a heating rate of 10°C/min, and the peak maximum of the endothermic peak was determined as the melting point (°C).

### [Dissolution Temperature]

The dissolution temperature at which the β-crystal nucleating agent dissolved into the molten polypropylene-based resin was determined by visually observing the dissolution state under an optical microscope equipped with a hot stage.

A predetermined polypropylene-based resin and β-crystal nucleating agent were dry blended in a Henschel mixer, and the dry blend was prepared into a pressed sheet using a press-molding machine at a resin temperature of 175°C. The pressed sheet was placed on the hot stage and heated to 140°C; subsequently, the behavior of the β-crystal nucleating agent when it dissolved into the molten polypropylene-based resin at a heating rate of 2°C/min was visually observed, and the point at which the solid β-crystal nucleating agent was no longer observed was determined as the dissolution temperature (°C).

When the β-crystal nucleating agent has dissolved into the molten polypropylene-based resin, the molten polypropylene-based resin composition is transparent; when it has not sufficiently dissolved, the resin composition is cloudy; therefore, whether the β-crystal nucleating agent has dissolved or not can also be determined in Step (i).

When the amount of the β-crystal nucleating agent exceeds 0.4 wt%, the dissolution and dispersion of the β-crystal nucleating agent into the polypropylene-based resin are rate-limiting step, causing the measured value to rise. Thus, in this case, it is preferred to employ the resin temperature obtained using the heating mixer actually used.

### [Deposition Temperature]

The deposition temperature, i.e., the temperature at which the β-crystal nucleating agent was deposited from the molten polypropylene-based resin composition in which the β-crystal nucleating agent was dissolved, was determined by visually observing the deposition state under an optical microscope equipped with a hot stage.

A predetermined polypropylene-based resin and β-crystal nucleating agent were dry blended in a Henschel mixer, and the dry blend was prepared into a pressed sheet using a press-molding machine at a resin temperature of 175°C. The pressed sheet was placed on the hot stage and heated to a temperature 10°C higher than the temperature at which the β-crystal nucleating agent was dissolved; subsequently, the behavior of the β-crystal nucleating agent when it was deposited from the molten polypropylene-based resin at a cooling rate of 2°C/min, was visually observed, and the point at which solid β-crystal nucleating agent was observed was determined to be the deposition temperature (°C).

### [Thermal Characteristics]

### Heat Resistant Rigidity

According to JIS K 7207 (1983), the heat distortion temperature (°C) of the polypropylene-based resin molded article was measured at a load of 4.6 kgf/cm². The higher the heat distortion temperature, the better the heat resistance.

### [Mechanical Characteristics]

### Modulus of Elasticity in Bending

According to ASTM D790, the modulus of elasticity in bending (MPa) of the polypropylene-based resin molded article was measured at 25°C.

### Young's Modulus

Young's modulus (MPa) was measured with respect to sample sheets, using a tensile testing machine under the following conditions: a temperature of 23°C; a length (distance between chucks) of 20 mm; a sample width of 5 mm; and a tensile speed of 50 mm/min. The samples used were obtained by cutting an injection-molded article into dumbbell-shaped pieces. A sample having a length parallel to the direction of the resin flow was used as a MD test piece; and a sample having a length perpendicular to the direction of the resin flow was used as a TD test piece.

### Impact Resistance

According to JIS K 5400 (1990), DuPont impact strength was measured using a DuPont impact tester (Yasuda Seiki, Ltd.). Each of the polypropylene-based resin molded articles of the Examples and Comparative Examples was used as an evaluation sample, and measurements were conducted for each sample 20 times using a falling weight of 300 g and a punch tip size of 1/4 inches, and the average value of the measured results was determined as the Dupont impact resistance (J). A higher value represents higher impact resistance.

### [Optical Characteristics]

### Method for Preparing Test Pieces

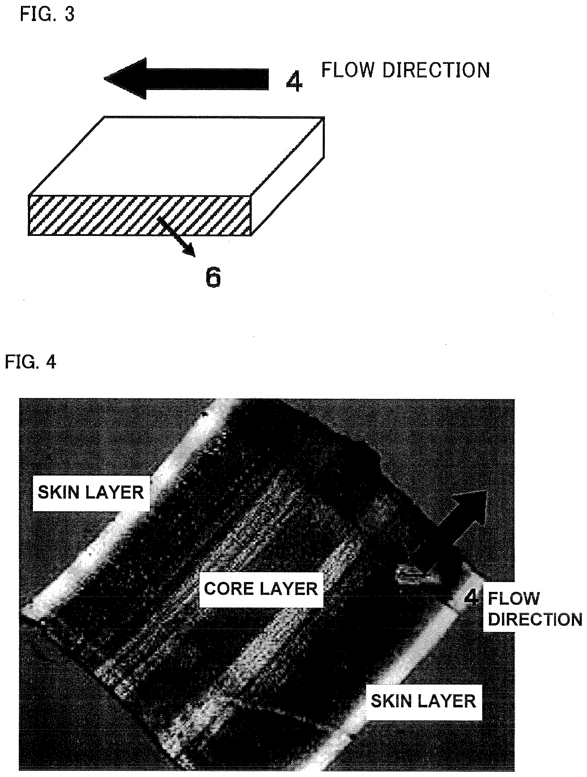

Using an ultramicrotome ("FCS" from Leica) at -100°C, a test piece was prepared by slicing a central portion of a polypropylene-based resin molded article, so as to include the skin layer and core layer, to prepare a test piece (indicated by the hatch lines in Fig. 3) having a thickness of 2.5 µm in parallel with the resin flow of the polypropylene-based resin molded article.

### Examination under a Polarizing Microscope

When a polypropylene-based resin molded article was examined with a polarizing microscope under crossed Nicols using a sensitive tint plate, the sample was placed on the microscope so that the axis of the sensitive tint plate with a greater refractive index corresponded to the direction of the resin flow during molding of the polypropylene-based resin composition. The sample was examined with a Nikon ECLIPSE LV100POL polarizing microscope under crossed Nicols using a sensitive tint plate, at a temperature of 25°C and at 20x magnification.

When a color in the range of "blue-bluish green-green" is observed, the direction of the orientation of the polypropylene chain (the c-axis), which is considered to be the direction in which the regularity of the long period of the crystalline lamellae is formed, is shown to be substantially parallel to the direction of the resin flow; thus indicating that the molded article has a positive birefringence. When a color in the range of "orange-yellow" is observed, the direction of the polypropylene chain (the c-axis), which is considered to be the direction in which the regularity of the long period of the crystalline lamellae is formed, is shown to be substantially perpendicular to the direction of the resin flow; thus indicating that the molded article has a negative birefringence.

The case where the axis of the sensitive tint plate with a greater refractive index corresponds to the major axis of the birefringence ellipsoid is referred to as "positive birefringence"; and blue color is observed. The case where they do not correspond to each other is referred to as "negative birefringence"; and yellow color is observed. The evaluation using a polarizing microscope is possible because it is known that, with a polypropylene resin, the direction of the polypropylene chain (the c axis) corresponds to the major axis of its birefringence ellipsoid (see "*Kobunshi sozaino kenbikyo nyumon*" ["Basics of Polarizing Microscopy for Polymer Materials"]; Agune Technical Center).

### Birefringence Measurement

Birefringence was measured at 25°C with Nikon ECLIPSE LV100POL under crossed Nicols, using a Berek compensator.

In each of the Examples, the birefringence of the skin layer was measured with respect to a region that extends 0.15 mm from the molded article surface, i.e., a main portion of the skin layer, toward the interior of the molded article; and the birefringence of the core layer was measured with respect to a region that extends 0.2 mm from the core portion of the molded article toward the surface of the molded article; and the maximum birefringences in these regions were determined. The thus-determined maximum values were defined as the maximum birefringences of the skin layer and core layer.

### Example 1

100 parts by weight of a polypropylene-based resin (polypropylene homopolymer, melting point: 168°C, MFR: 8 g/10min); 0.05 parts by weight of N,N'-dicyclohexyl-2,6-naphthalenedicarboxylic amide (product name: NJSTAR NU-100, manufactured by New Japan Chemical Co., Ltd.) as a β-crystal nucleating agent; 0.05 parts by weight of calcium stearate (product name: "CP-S", manufactured by Nitto Kasei Kogyo K.K.) as a fatty acid metal salt; and 0.05 parts by weight of tetrakis[methylene-3-(3,5-di-t-butyl-4-hydroxyphenyl)propionate]methane (product name: "IRGANOX1010", manufactured by Ciba Specialty Chemicals Inc.) as a polypropylene modifier; 0.05 parts by weight of tetras(2,4-di-t-butylphenyl)phosphite (product name: "IRGAFOS168", manufactured by Ciba Specialty Chemicals Inc.) were dry blended in a Henschel mixer. The dry blend was processed in an extruder to dissolve the N,N'-dicyclohexyl-2,6-naphthalenedicarboxylic amide at a resin temperature of 260°C to form a molten polypropylene-based resin composition (Step (i)), and the molten polypropylene-based resin composition was cooled with water. The cooled composition was then cut with a pelletizer to yield a polypropylene-based resin composition in pellet form (Step (ii)). The pellets were injection molded at a resin temperature of 200°C and a mold temperature of 120°C, thereby yielding a polypropylene-based resin molded article of the invention (a test piece having the shape shown in Fig. 3 (Step (iii)).

The thus-obtained polypropylene-based resin molded article was evaluated for thermal properties, mechanical properties, and optical properties. The results are summarized in Tables 1 and 3. Both of the thermal and mechanical properties of the molded article were suitable for practical application.

The dissolution temperature of 0.05 parts by weight of the β-crystal nucleating agent was 250°C. The extruded strand of the molten polypropylene-based resin composition obtained in Step (i) was transparent, thus confirming the dissolution of the total amount of the β-crystal nucleating agent. The deposition temperature was 210°C.

### Example 2

A polypropylene-based resin molded article of the invention was produced in the same manner as in Example 1, except that the mold temperature was 80°C.

The resulting polypropylene-based resin molded article was evaluated for thermal properties, mechanical properties, and optical properties. The results are summarized in Tables 1 and 3. Both of the thermal and mechanical properties of the molded article were suitable for practical application.

### Example 3

A polypropylene-based resin molded article of the invention was produced in the same manner as in Example 1, except that 3,9-bis[4-(N-cyclohexylcarbamoyl)phenyl]-2,4,8,10-tetraoxaspiro[5.5]undecane was used as a β-crystal nucleating agent, and the mold temperature was 80°C.

The thus-obtained polypropylene-based resin molded article was evaluated for thermal properties, mechanical properties, and optical properties. The results are summarized in Tables 1 and 3. Both of the thermal and mechanical properties of the molded article were suitable for practical application.

The dissolution temperature of 0.05 parts by weight of the β-crystal nucleating agent was 220°C. The extruded strand of the molten polypropylene-based resin composition obtained in Step (i) was transparent, thus confirming the dissolution of the total amount of the β-crystal nucleating agent. The deposition temperature was 200°C.

### Examples 4 to 11

Polypropylene-based resin molded articles of the invention were produced in the same manner as in Example 1, except that the type and amount of the β-crystal nucleating agent used, the type and amount of the fatty acid metal salt used, and the production conditions were varied as shown in Table 1.

The thus-obtained polypropylene-based resin molded article was evaluated for thermal properties, mechanical properties, and optical properties. The results are summarized in Tables 1 and 3. Both of the thermal and mechanical properties of the molded article were suitable for practical application. The dissolution temperature and deposition temperature of each β-crystal nucleating agent are summarized in Table 4.

### Comparative Examples 1 to 3

Comparative polypropylene-based resin molded articles were produced in the same manner as in Example 1, except that the resin composition and production conditions were varied as shown in Table 2.

The thus-obtained molded articles were evaluated for thermal properties, mechanical properties, and optical properties. The results are summarized in Tables 2 and 3.

With respect to the β-crystal nucleating agents shown in Tables 1, 2, and 4, A denotes "N,N'-dicyclohexyl-2,6-naphthalenedicarboxylic amide", B denotes "3,9-bis[4-(N-cyclohexylcarbamoyl)phenyl]-2,4,8,10-tetraoxaspiro[5.5]undecane", and C denotes trimesic acid tri(2,3-dimethylcyclohexylamide). For each β-crystal nucleating agent, crystals formed upon crystallization from the polypropylene-based resin were confirmed to be needle crystals by microscopic observation.

With respect to the fatty acid metal salts shown in Tables 1 and 2, a denotes "calcium stearate", b denotes "magnesium stearate", and c denotes "zinc stearate".

**Table 1**

| | β-Crystal Nucleating Agent | | Fatty Acid Metal Salt | | Production Conditions | | | Molded Article | Birefringence | | Young's Modulus |
|---|---|---|---|---|---|---|---|---|---|---|---|
| | Type | Amount | Type | Amount | Resin Temperature (Step (i)) | Resin Temperature (Step (iii)) | Mold Temperature (Step (iii)) | Thickness | Skin Layer | Core Layer | MD/TD Test Piece |
| | | (Parts by Weight) | | (Parts by Weight) | °C | °C | °C | cm | Δn x 10³ | | MPa |
| Ex. 1 | A | 0.05 | a | 0.05 | 260 | 200 | 120 | 1.0 | +15 | -15 | 1280/930 |
| Ex. 2 | A | 0.05 | a | 0.05 | 260 | 200 | 80 | 1.0 | +13 | -9 | 1070/930 |
| Ex. 3 | B | 0.05 | a | 0.05 | 260 | 200 | 80 | 1.0 | +14 | -11 | 1040/870 |
| Ex. 4 | C | 0.05 | a | 0.05 | 260 | 200 | 80 | 1.0 | +13 | -11 | 1080/960 |
| Ex. 5 | A | 0.2 | a | 0.05 | 300 | 200 | 120 | 1.0 | +14 | -13 | 1310/1010 |
| Ex. 6 | A | 0.2 | a | 0.03 | 300 | 200 | 80 | 1.0 | +13 | -10 | 1280/1080 |
| Ex. 7 | B | 0.2 | a | 0.05 | 280 | 200 | 80 | 1.0 | +15 | -13 | 1210/980 |
| Ex. 8 | A | 0.4 | a | 0.05 | 320 | 200 | 120 | 1.0 | +10 | -10 | 1070/910 |
| Ex. 9 | A | 0.2 | a | 0.2 | 300 | 200 | 120 | 1.0 | +10 | -7 | 1010/860 |
| Ex. 10 | A | 0.05 | b | 0.05 | 260 | 200 | 120 | 1.0 | +15 | -14 | 1260/900 |
| Ex. 11 | A | 0.05 | c | 0.05 | 260 | 190 | 120 | 1.0 | +14 | -12 | 1270/930 |

**Table 2**

| | β-Crystal Nucleating Agent | | Fatty Acid Metal Salt | | Production Conditions | | | Molded Article | Birefringence | | Young's Modulus |
|---|---|---|---|---|---|---|---|---|---|---|---|
| | Type | Amount | Type | Amount | Resin Temperature (Step (i)) | Resin Temperature (Step (iii)) | Mold Temperature (Step (iii)) | Thickness | Skin Layer | Core Layer | MD/TD Test Piece |
| | | (Parts by Weight) | | (Parts by Weight) | °C | °C | °C | cm | Δn x 10³ | | MPa |
| Com. Ex. 1 | A | 0.05 | - | - | 260 | 200 | 40 | 1.0 | +13 | +3 | 1130/1030 |
| Com. Ex. 2 | A | 0.05 | - | - | 260 | 260 | 80 | 1.0 | +2 | +2 | 930/960 |
| Com. Ex. 3 | - | - | a | 0.05 | 260 | 200 | 80 | 1.0 | +15 | 0 | 1220/1070 |

**Table 3**

| | Modulus of Elasticity in Bending | Heat Distortion Temperature | DuPont impact strength | |
|---|---|---|---|---|
| | MPa | °C | (J, 0.5 mm) | (J, 2.0 mm) |
| Ex. 1 | 2020 | 146 | 0.31 | 6.1 |
| Ex. 2 | 2000 | 146 | 0.21 | 5.3 |
| Ex. 3 | 2010 | 145 | 0.22 | 5.3 |
| Ex. 4 | 2000 | 145 | 0.21 | 4.1 |
| Ex. 5 | 2060 | 146 | 0.36 | 5.7 |
| Ex. 6 | 2050 | 146 | 0.29 | 5.1 |
| Ex. 7 | 2040 | 145 | 0.28 | 5.3 |
| Ex. 8 | 2000 | 144 | 0.21 | 3.9 |
| Ex. 9 | 2020 | 144 | 0.26 | 3.9 |
| Ex. 10 | 2000 | 146 | 0.29 | 6.0 |
| Ex. 11 | 2010 | 146 | 0.29 | 5.9 |
| Com. Ex. 1 | 1890 | 143 | 0.13 | 3.4 |
| Com. Ex. 2 | 1430 | 135 | 0.29 | 5.9 |
| Com. Ex. 3 | 1520 | 110 | 0.11 | 0.3 |

**Table 4**

| β-Crystal Nucleating Agent | | Dissolved Temperature | Deposition Temperature |
|---|---|---|---|
| Type | Amount | | |
| | (Parts by Weight) | °C | °C |
| A | 0.05 | 250 | 210 |
| | 0.2 | 290 | 240 |
| | 0.4 | 310 | 270 |
| B | 0.05 | 220 | 200 |
| | 0.2 | 260 | 220 |
| C | 0.05 | 250 | 220 |

In each of Examples 1 to 11, as shown in Fig. 4, layers in different directions were formed in the portion where the polypropylene chain (the c-axis) of the polypropylene-based resin had orientations.

By contrast, the portions having small absolute values of birefringence, as in Comparative Examples 1 to 3, were confirmed to include no definite, oriented layers. In Comparative Example 2, the polypropylene chain of the polypropylene-based resin is not considered to have orientation. In Comparative Example 3, the core layer was determined to have zero birefringence because polypropylene spherulites were clearly confirmed, indicating that the polypropylene-based resin was unoriented.

### INDUSTRIAL APPLICABILITY

The polypropylene-based resin molded article of the invention has an excellent balance of rigidity, heat resistance, and impact resistance, and, in particular, has high impact strength; thus, it is usable as molded articles such as parts for automobiles and electronic home appliances, as well as for mechanical engineering, the chemical industry, etc.

### BRIEF DESCRIPTION OF THE DRAWINGS

Fig. 1 is a diagram showing the stacked structure of crystalline lamellae whose direction of regularity is perpendicular to the resin flow when the molten polypropylene-based resin composition is crystallized under flow.
Fig. 2 is a diagram showing the stacked structure of crystalline lamellae whose direction of regularity is parallel to the resin flow when the molten polypropylene-based resin composition is crystallized under flow.
Fig. 3 is a diagram for use in illustrating the sliced surface of the test piece for evaluation of optical characteristics.
Fig. 4 shows one example (Example 1) of the state examined under a polarizing microscope.

### EXPLANATION OF REFERENCE NUMERALS

1: crystalline lamellae
2: amorphous region (containing tie molecules)
3: long period
4: direction of resin flow during molding of polypropylene-based resin composition
5: direction in which the regularity of the long period is formed
6: sliced surface

## Claims

1. A polypropylene-based resin molded article comprising a layered structure including layers A and B comprising a polypropylene-based resin,
one of the layers A and B having a polypropylene chain orientation different from that of the other layer; and
each of the layers A and B having a maximum absolute value of birefringence of 0.005 or more, the birefringences of the layers A and B being different from each other, one being positive and the other being negative, wherein the birefringence is measured according to the method of the description.

2. The polypropylene-based resin molded article according to claim 1, wherein the polypropylene chain in the layer A is oriented in a direction perpendicular to a resin flow during molding of a polypropylene-based resin composition, and the polypropylene chain in the layer B is oriented in a direction parallel to the resin flow during molding of the polypropylene-based resin composition.

3. The polypropylene-based resin molded article according to claim 1 or 2, wherein the layer A is a core layer, and the layer B is a skin layer.

4. The polypropylene-based resin molded article according to any one of claims 1 to 3, comprising, per 100 parts by weight of the polypropylene-based resin, 0.0001 to 1 part by weight of a β-crystal nucleating agent; and 0.001 to 1 part by weight of a fatty acid metal salt represented by Formula (1):
(R¹COO)ₘM (1)
wherein R¹ is a C7-C31 alkyl group, a C7-C31 alkenyl group, or a C6-C30 optionally substituted cycloalkyl group, each of the alkyl, alkenyl, and cycloalkyl groups optionally having one or two hydroxy groups; m is an integer of 2 or 3; and M is a divalent or trivalent metal.

5. The polypropylene-based resin molded article according to claim 4, wherein the β-crystal nucleating agent is at least one selected from the group consisting of:
amide compounds represented by Formula (2):
R²(-CONHR³)ₙ (2)
wherein n is an integer of 2 to 6; R² is a C2-C18 saturated or unsaturated aliphatic polycarboxylic acid residue, a C3-C18 alicyclic polycarboxylic acid residue, or a C6-C18 aromatic polycarboxylic acid residue; and two to six R³s are the same or different and are each a C5-C30 saturated or unsaturated aliphatic amine residue, a C5-C30 alicyclic amine residue, or a C6-C30 aromatic amine residue; and
amide compounds represented by Formula (3): 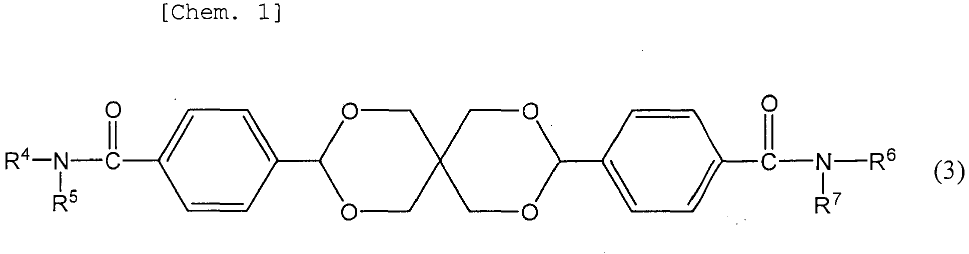 wherein R⁴, R⁵, R⁶, and R⁷ are the same or different and are each a hydrogen atom, a C1-C20 alkyl group, a C5-C20 optionally substituted cycloalkyl group, or a C6-C20 optionally substituted aryl group; and R⁴ and R⁵ or R⁶ and R⁷ may be taken together to form an alkylene group.

6. The polypropylene-based resin molded article according to claim 4 or 5, which is obtained by the following steps:
(i) dissolving the β-crystal nucleating agent in the polypropylene-based resin by heating, to produce a molten polypropylene-based resin composition;
(ii) cooling the molten polypropylene-based resin composition obtained in Step (i) to deposit crystals of the β-crystal nucleating agent; and
(iii) melting the polypropylene-based resin composition cooled in Step (ii) at a temperature equal to or higher than a melting point of the polypropylene-based resin, and at which the β-crystal nucleating agent is not dissolved by heating, and subsequently molding the resulting composition; wherein
the fatty acid metal salt is present in the polypropylene-based resin composition in Step (i) or (ii).

7. A polypropylene-based resin molded article comprising a layered structure including layers A and B comprising a polypropylene-based resin, one of the layers A and B having a polypropylene chain orientation different from that of the other layer;
the polypropylene-based resin molded article being obtained by the following steps:
(i) dissolving the β-crystal nucleating agent in the polypropylene-based resin by heating, to produce a molten polypropylene-based resin composition;
(ii) cooling the molten polypropylene-based resin composition obtained in Step (i) to deposit crystals of the β-crystal nucleating agent; and
(iii) melting the polypropylene-based resin composition cooled in Step (ii) at a temperature equal to or higher than a melting point of the polypropylene-based resin, and at which the β-crystal nucleating agent is not dissolved by heating, and subsequently molding the resulting composition; wherein
a fatty acid metal salt represented by Formula (1):
(R¹COO)ₘM (1)
wherein R¹ is a C7-C31 alkyl group, a C7-C31 alkenyl group, or a C6-C30 optionally substituted cycloalkyl group, each of the alkyl, alkenyl, and cycloalkyl groups optionally having one or two hydroxy groups; m is an integer of 2 or 3; and M is a divalent or trivalent metal, is present in the polypropylene-based resin composition in Step (i) or (ii).

8. The polypropylene-based resin molded article according to claim 7, wherein each of the layers A and B has a maximum absolute value of birefringence of 0.005 or more, and the birefringences of the layers A and B are different from each other, one being positive and the other being negative.

9. The polypropylene-based resin molded article according to claim 7 or 8, wherein the crystals of the β-crystal nucleating agent are oriented in a direction of a resin flow during molding of the polypropylene-based resin composition; the polypropylene chain in the layer A is oriented in a direction perpendicular to the orientation of the crystals of the β-crystal nucleating agent; and the polypropylene chain in the layer B is oriented in a direction parallel to the orientation of the crystals of the β-crystal nucleating agent.

10. The polypropylene-based resin molded article according to any one of claims 7 to 9, wherein the layer A is a core layer, and the layer B is a skin layer.

11. The polypropylene-based resin molded article according to any one of claims 7 to 10, comprising, per 100 parts by weight of the polypropylene-based resin, 0.0001 to 1 part by weight of the β-crystal nucleating agent and 0.001 to 1 part by weight of the fatty acid metal salt represented by Formula (1) above.

12. The polypropylene-based resin molded article according to any one of claims 7 to 11, wherein the β-crystal nucleating agent is at least one selected from the group consisting of:
amide compounds represented by Formula (2):
R²(-CONHR³)ₙ (2)
wherein n is an integer of 2 to 6; R² is a C2-C18 saturated or unsaturated aliphatic polycarboxylic acid residue, a C3-C18 alicyclic polycarboxylic acid residue, or a C6-C18 aromatic polycarboxylic acid residue; and two to six R³s are the same or different and are each a C5-C30 saturated or unsaturated aliphatic amine residue, a C5-C30 alicyclic amine residue, or a C6-C30 aromatic amine residue; and
amide compounds represented by Formula (3): 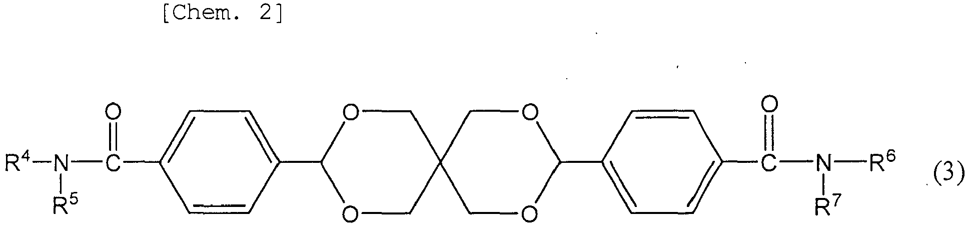 wherein R⁴, R⁵, R⁶, and R⁷ are the same or different and are each a hydrogen atom, a C1-C20 alkyl group, a C5-C20 optionally substituted cycloalkyl group, or a C6-C20 optionally substituted aryl group; and R⁴ and R⁵ or R⁶ and R⁷ may be taken together to form an alkylene group.

13. A method for producing a polypropylene-based resin molded article with high impact resistance, comprising the steps of:
(i) dissolving the β-crystal nucleating agent in the polypropylene-based resin by heating, to produce a molten polypropylene-based resin composition;
(ii) cooling the molten polypropylene-based resin composition obtained in Step (i) to deposit crystals of the β-crystal nucleating agent; and
(iii) melting the polypropylene-based resin composition cooled in Step (ii) at a temperature equal to or higher than a melting point of the polypropylene-based resin, and at which the β-crystal nucleating agent is not dissolved by heating, and subsequently molding the resulting composition; wherein
a fatty acid metal salt is present in the polypropylene-based resin composition in Step (i) or (ii).

14. A method for improving the impact resistance of a polypropylene-based resin molded article, comprising stacking at least two layers comprising a polypropylene-based resin, one of these layers having a polypropylene chain orientation different from that of the other layer; and
each of the layers having a maximum absolute value of birefringence of 0.005 or more, the birefringences of the layers being different from each other, one being positive and the other being negative, wherein the birefringence is measured according to the method of the description.

## Patentansprüche

1. Ein Harzformgegenstand auf Polypropylenbasis, umfassend eine Schichtstruktur, die Schichten A und B enthält, umfassend ein Harz auf Polypropylenbasis,
wobei eine der Schichten A und B eine Ausrichtung der Polypropylenkette aufweist, die von derjenigen der anderen Schicht verschieden ist; und
jede der Schichten A und B einen maximalen absoluten Wert der Doppelbrechung von 0,005 oder mehr aufweist, wobei die Doppelbrechung der Schichten A und B voneinander verschieden ist, wobei eine positiv und die andere negativ ist, wobei die Doppelbrechung gemäß dem Verfahren der Beschreibung gemessen wird.

2. Der Harzformgegenstand auf Polypropylenbasis nach Anspruch 1, wobei die Polypropylenkette in Schicht A in einer Richtung ausgerichtet ist, die senkrecht zu einem Harzfluss während des Formens einer Harzzusammensetzung auf Polypropylenbasis verläuft und die Polypropylenkette in Schicht B in einer Richtung ausgerichtet ist, die parallel zu dem Harzfluss während des Formens der Harzzusammensetzung auf Polypropylenbasis verläuft.

3. Der Harzformgegenstand auf Polypropylenbasis nach Anspruch 1 oder 2, wobei Schicht A eine Kernschicht ist und Schicht B eine Deckschicht ist.

4. Der Harzformgegenstand auf Polypropylenbasis nach einem der Ansprüche 1 bis 3, umfassend, je 100 Gewichtsteile des Harzes auf Polypropylenbasis, 0,0001 bis 1 Gewichtsteil eines β-Kristall-Nukleierungsmittels; und 0,001 bis 1 Gewichtsteil eines Fettsäuremetallsalzes, dargestellt durch Formel (1):
(R¹COO)ₘM (1)
wobei R¹ eine C7-C31-Alkylgruppe, eine C7-C31-Alkenylgruppe oder eine gegebenenfalls substituierte C6-C30-Cycloalkylgruppe ist, wobei jede der Alkyl-, Alkenyl- und Cycloalkylgruppen gegebenenfalls eine oder zwei Hydroxygruppen aufweisen; m eine ganze Zahl von 2 oder 3 ist und M ein zweiwertiges oder dreiwertiges Metall ist.

5. Der Harzformgegenstand auf Polypropylenbasis nach Anspruch 4, wobei das β-Kristall-Nukleierungsmittel mindestens eines ist, ausgewählt aus der Gruppe bestehend aus:
Amidverbindungen, dargestellt durch Formel (2):
R²(-CONHR³)ₙ (2)
wobei n eine ganze Zahl von 2 bis 6 ist; R² ein C2-C18 gesättigter oder ungesättigter aliphatischer Polycarbonsäurerest, ein C3-C18 alicyclischer Polycarbonsäurerest oder ein C6-C18 aromatischer Polycarbonsäurerest ist und zwei bis sechs Reste R³ gleich oder verschieden sind und jeweils ein C5-C30 gesättigter oder ungesättigter aliphatischer Aminrest, ein C5-C30 alicyclischer Aminrest oder ein C6-C30 aromatischer Aminrest sind; und
Amidverbindungen, dargestellt durch Formel (3): 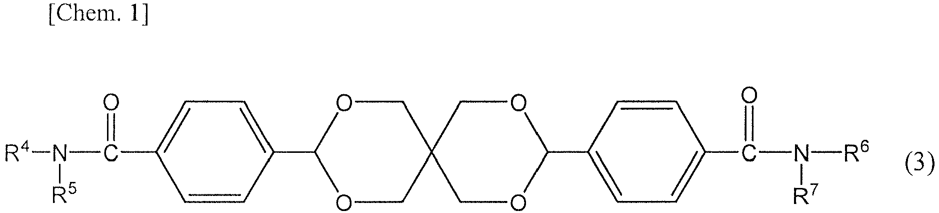 wobei R⁴, R⁵, R⁶ und R⁷ gleich oder verschieden sind und jeweils ein Wasserstoffatom, eine C1-C20-Alkylgruppe, eine C5-C20 gegebenenfalls substituierte Cycloalkylgruppe oder eine C6-C20 gegebenenfalls substituierte Arylgruppe sind und R⁴ und R⁵ oder R⁶ und R⁷ zusammengenommen werden können, um eine Alkylengruppe zu bilden.

6. Der Harzformgegenstand auf Polypropylenbasis nach Anspruch 4 oder 5, welcher durch die folgenden Schritte erhalten wird:
(i) Lösen des β-Kristall-Nukleierungsmittels in dem Harz auf Polypropylenbasis durch Erwärmen, um eine geschmolzene Harzzusammensetzung auf Polypropylenbasis herzustellen;
(ii) Kühlen der in Schritt (i) erhaltenen geschmolzenen Harzzusammensetzung auf Polypropylenbasis, damit sich Kristalle aus dem β-Kristall-Nukleierungsmittel ablagern; und
(iii) Schmelzen der in Schritt (ii) gekühlten Harzzusammensetzung auf Polypropylenbasis bei einer Temperatur die gleich oder höher als die eines Schmelzpunktes des Harzes auf Polypropylenbasis ist, und bei der das β-Kristall-Nukleierungsmittel durch Erwärmen nicht gelöst wird und anschließend Formen der so erhaltenen Zusammensetzung, wobei
das Fettsäuremetallsalz in der Harzzusammensetzung auf Polypropylenbasis in Schritt (i) oder (ii) vorhanden ist.

7. Ein Harzformgegenstand auf Polypropylenbasis, umfassend eine Schichtstruktur, die Schichten A und B enthält, umfassend ein Harz auf Polypropylenbasis, wobei eine der Schichten A und B eine Ausrichtung der Polypropylenkette aufweist, die von derjenigen der anderen Schicht verschieden ist;
wobei der Harzformgegenstand auf Polypropylenbasis durch die nachstehenden Schritte erhalten wird:
(i) Lösen des β-Kristall-Nukleierungsmittels in dem Harz auf Polypropylenbasis durch Erwärmen, um eine geschmolzene Harzzusammensetzung auf Polypropylenbasis herzustellen;
(ii) Kühlen der in Schritt (i) erhaltenen geschmolzenen Harzzusammensetzung auf Polypropylenbasis, damit sich Kristalle aus dem β-Kristall-Nukleierungsmittel ablagern; und
(iii) Schmelzen der in Schritt (ii) gekühlten Harzzusammensetzung auf Polypropylenbasis bei einer Temperatur die gleich oder höher als die eines Schmelzpunktes des Harzes auf Polypropylenbasis ist, und bei der das β-Kristall-Nukleierungsmittel durch Erwärmen nicht gelöst wird und anschließend Formen der so erhaltenen Zusammensetzung, wobei
ein Fettsäuremetallsalz, dargestellt durch Formel (1):
(R¹COO)ₘM (1)
wobei R¹ eine C7-C31-Alkylgruppe, eine C7-C31-Alkenylgruppe oder eine C6-C30 gegebenenfalls substituierte Cycloalkylgruppe ist, wobei jede der Alkyl-, Alkenyl- und Cycloalkylgruppen gegebenenfalls eine oder zwei Hydroxygruppen aufweisen; m eine ganze Zahl von 2 oder 3 ist und M ein zweiwertiges oder dreiwertiges Metall ist, in der Harzzusammensetzung auf Polypropylenbasis in Schritt (i) oder (ii) vorhanden ist.

8. Der Harzformgegenstand auf Polypropylenbasis nach Anspruch 7, wobei jede der Schichten A und B einen maximalen absoluten Wert der Doppelbrechung von 0,005 oder mehr aufweist und die Doppelbrechungen der Schichten A und B voneinander verschieden sind, wobei eine positiv und die andere negativ ist.

9. Der Harzformgegenstand auf Polypropylenbasis nach Anspruch 7 oder 8, wobei die Kristalle des β-Kristall-Nukleierungsmittels in einer Richtung eines Harzflusses während des Formens der Harzzusammensetzung auf Polypropylenbasis ausgerichtet sind; die Polypropylenkette in Schicht A in einer Richtung ausgerichtet ist, die senkrecht zu der Ausrichtung der Kristalle des β-Kristall-Nukleierungsmittels verläuft; und die Polypropylenkette in Schicht B in einer Richtung ausgerichtet ist, die parallel zur Ausrichtung der Kristalle des β-Kristall-Nukleierungsmittels verläuft.

10. Der Harzformgegenstand auf Polypropylenbasis nach einem der Ansprüche 7 bis 9, wobei Schicht A eine Kernschicht ist und Schicht B eine Deckschicht ist.

11. Der Harzformgegenstand auf Polypropylenbasis nach einem der Ansprüche 7 bis 10, umfassend, je 100 Gewichtsteile des Harzes auf Polypropylenbasis, 0,0001 bis 1 Gewichtsteil des β-Kristall-Nukleierungsmittels und 0,001 bis 1 Gewichtsteil des Fettsäuremetallsalzes, dargestellt durch die vorstehende Formel (1).

12. Der Harzformgegenstand auf Polypropylenbasis nach einem der Ansprüche 7 bis 11, wobei das β-Kristall-Nukleierungsmittel mindestens eines ist, ausgewählt aus der Gruppe bestehend aus:
Amidverbindungen, dargestellt durch Formel (2):
R²(-CONHR³)ₙ (2)
wobei n eine ganze Zahl von 2 bis 6 ist; R² ein C2-C18 gesättigter oder ungesättigter aliphatischer Polycarbonsäurerest, ein C3-C18 alicyclischer Polycarbonsäurerest oder ein C6-C18 aromatischer Polycarbonsäurerest ist und zwei bis sechs Reste R³ gleich oder verschieden sind und jeweils ein C5-C30 gesättigter oder ungesättigter aliphatischer Aminrest, ein C5-C30 alicyclischer Aminrest oder ein C6-C30 aromatischer Aminrest sind; und
Amidverbindungen, dargestellt durch Formel (3): 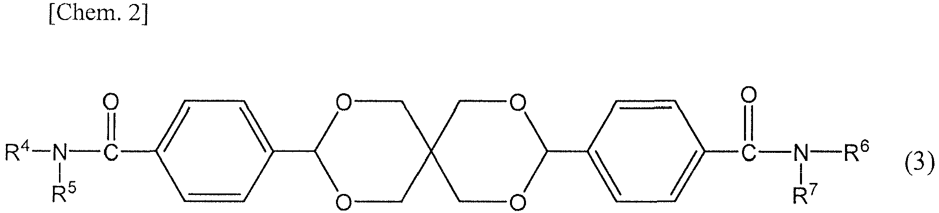 wobei R⁴, R⁵, R⁶ und R⁷ gleich oder verschieden sind und jeweils ein Wasserstoffatom, eine C1-C20-Alkylgruppe, eine C5-C20 gegebenenfalls substituierte Cycloalkylgruppe oder eine C6-C20 gegebenenfalls substituierte Arylgruppe sind und R⁴ und R⁵ oder R⁶ und R⁷ zusammengenommen werden können, um eine Alkylengruppe zu bilden.

13. Ein Verfahren zur Herstellung eines Harzformgegenstandes auf Polypropylenbasis mit einer hohen Schlagfestigheit, umfassend die Schritte:
(i) Lösen des β-Kristall-Nukleierungsmittels in dem Harz auf Polypropylenbasis durch Erwärmen, um eine geschmolzene Harzzusammensetzung auf Polypropylenbasis herzustellen;
(ii) Kühlen der in Schritt (i) erhaltenen geschmolzenen Harzzusammensetzung auf Polypropylenbasis, damit sich Kristalle aus dem β-Kristall-Nukleierungsmittel ablagern; und
(iii) Schmelzen der in Schritt (ii) gekühlten Harzzusammensetzung auf Polypropylenbasis bei einer Temperatur die gleich oder höher als die eines Schmelzpunktes des Harzes auf Polypropylenbasis ist, und bei der das β-Kristall-Nukleierungsmittel durch Erwärmen nicht gelöst wird und anschließend Formen der so erhaltenen Zusammensetzung, wobei
ein Fettsäuremetallsalz in der Harzzusammensetzung auf Polypropylenbasis in Schritt (i) oder (ii) vorhanden ist.

14. Ein Verfahren zur Verbesserung der Schlagfestigkeit eines Harzformgegenstandes auf Polypropylenbasis, umfassend übereinander Anordnen von mindestens zwei Schichten, umfassend ein Harz auf Polypropylenbasis, wobei eine dieser Schichten eine Ausrichtung der Polypropylenkette aufweist, die von derjenigen der anderen Schicht verschieden ist; und
jede der Schichten einen maximalen absoluten Wert der Doppelbrechung von 0,005 oder mehr aufweist, wobei die Doppelbrechungen der Schichten voneinander verschieden sind, wobei eine positiv und die andere negativ ist, wobei die Doppelbrechung gemäß dem Verfahren der Beschreibung gemessen wird.

## Revendications

1. Article moulé en résine à base de polypropylène comprenant une structure en couches incluant les couches A et B comprenant une résine à base de polypropylène,
l'une des couches A et B ayant une orientation de chaîne polypropylène différente de celle de l'autre couche ; et
chacune des couches A et B ayant une valeur absolue maximale de biréfringence de 0,005 ou plus, les biréfringences des couches A et B étant différentes l'une de l'autre, l'une étant positive et l'autre étant négative, dans lequel la biréfringence est mesurée selon la méthode de la description.

2. Article moulé en résine à base de polypropylène selon la revendication 1, dans lequel la chaîne polypropylène dans la couche A est orientée dans une direction perpendiculaire à un écoulement de résine pendant le moulage de la composition de résine à base de polypropylène, et la chaîne polypropylène dans la couche B est orientée dans une direction parallèle à l'écoulement de résine pendant le moulage de la composition de résine à base de polypropylène.

3. Article moulé en résine à base de polypropylène selon la revendication 1 ou 2, dans lequel la couche A est une couche d'âme, et la couche B est une couche de peau.

4. Article moulé en résine à base de polypropylène selon l'une quelconque des revendications 1 à 3, comprenant, pour 100 parties en poids de la résine à base de polypropylène, 0,0001 à 1 partie en poids d'un agent de nucléation de cristaux β ; et 0,001 à 1 partie en poids d'un sel de métal d'acide gras représenté par la formule (1) :
(R¹COO)ₘM (1)
dans laquelle R¹ est un groupe alkyle en C₇ à C₃₁, un groupe alcényle en C₇ à C₃₁, ou un groupe cycloalkyle en C₆ à C₃₀ facultativement substitué, chacun des groupes alkyle, alcényle, et cycloalkyle comportant facultativement un ou deux groupes hydroxy ; m est un nombre entier de 2 ou 3 ; et M est un métal divalent ou trivalent.

5. Article moulé en résine à base de polypropylène selon la revendication 4, dans lequel l'agent de nucléation de cristaux β est au moins un élément choisi dans le groupe consistant en :
des composés amide représentés par la formule (2) :
R²(-CONHR³)ₙ (2)
dans lequel n est un nombre entier de 2 à 6 ; R² est un résidu d'acide polycarboxylique aliphatique saturé ou insaturé en C₂ à C₁₈, un résidu d'acide polycarboxylique alicyclique en C₃ à C₁₈, ou un résidu d'acide polycarboxylique aromatique en C₆ à C₁₈ ; et deux à six R³ sont identiques ou différents et sont chacun un résidu d'amine aliphatique saturé ou insaturé en C₅ à C₃₀, un résidu d'amine alicyclique en C₅ à C₃₀, ou un résidu d'amine aromatique en C₆ à C₃₀ ; et
des composés amide représentés par la formule (3) : 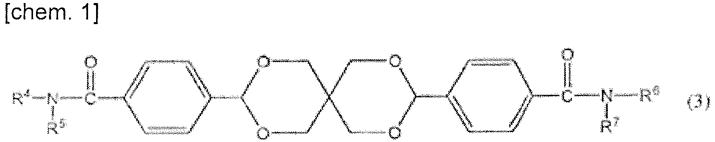
dans laquelle R⁴, R⁵, R⁶, et R⁷ sont identiques ou différents et sont chacun un atome d'hydrogène, un groupe alkyle en C₁ à C₂₀, un groupe cycloalkyle en C₅ à C₂₀ facultativement substitué ou un groupe aryle en C₆ à C₂₀ facultativement substitué ; et R⁴ et R⁵ ou R⁶ et R⁷ peuvent être pris ensemble pour former un groupe alkylène.

6. Article moulé en résine à base de polypropylène selon la revendication 4 ou 5, qui est obtenu par les étapes suivantes :
(i) dissolution de l'agent de nucléation de cristaux β dans la résine à base de polypropylène par chauffage, pour produire une composition de résine à base de polypropylène fondue ;
(ii) refroidissement de la composition de résine à base de polypropylène fondue obtenue à l'étape (i) pour déposer des cristaux de l'agent de nucléation de cristaux β ; et
(iii) fusion de la composition de résine à base de polypropylène refroidie à l'étape (ii) à une température supérieure ou égale à un point de fusion de la résine à base de polypropylène, et à laquelle l'agent de nucléation de cristaux β n'est pas dissous par chauffage, et moulage ultérieur de la composition résultante ; dans lequel
le sel de métal d'acide gras est présent dans la composition de résine à base de polypropylène dans l'étape (i) ou (ii).

7. Article moulé en résine à base de polypropylène comprenant une structure en couches incluant des couches A et B comprenant une résine à base de polypropylène, l'une des couches A et B ayant une orientation de chaîne polypropylène différente de celle de l'autre couche ;
l'article moulé en résine à base de polypropylène étant obtenu par les étapes suivantes :
(i) dissolution de l'agent de nucléation de cristaux β dans la résine à base de polypropylène par chauffage, pour produire une composition de résine à base de polypropylène fondue ;
(ii) refroidissement de la composition de résine à base de polypropylène fondue obtenue à l'étape (i) pour déposer des cristaux de l'agent de nucléation de cristaux β ; et
(iii) fusion de la composition de résine à base de polypropylène refroidie à l'étape (ii) à une température supérieure ou égale à un point de fusion de la résine à base de polypropylène, et à laquelle l'agent de nucléation de cristaux β n'est pas dissous par chauffage, et moulage ultérieur de la composition résultante ; dans lequel
un sel de métal d'acide gras représenté par la formule (1) :
(R¹COO)ₘM (1)
dans laquelle R¹ est un groupe alkyle en C₇ à C₃₁, groupe alcényle en C₇ à C₃₁ ou un groupe cycloalkyle en C₆ à C₃₀ facultativement substitué, chacun des groupes alkyle, alcényle et cycloalkyle comportant facultativement un ou deux groupes hydroxy ; m est un nombre entier de 2 ou 3 ; et M est un métal divalent ou trivalent, est présent dans la composition de résine à base de polypropylène dans l'étape (i) ou (ii).

8. Article moulé en résine à base de polypropylène selon la revendication 7, dans lequel chacune des couches A et B a une valeur absolue maximale de biréfringence de 0,005 ou plus, et les biréfringences des couches A et B sont différentes l'une de l'autre, l'une étant positive et l'autre étant négative.

9. Article moulé en résine à base de polypropylène selon la revendication 7 ou 8, dans lequel les cristaux de l'agent de nucléation de cristaux β sont orientés dans une direction d'un écoulement de résine pendant un moulage de la composition de résine à base de polypropylène ; la chaîne polypropylène dans la couche A est orientée dans une direction perpendiculaire à l'orientation des cristaux de l'agent de nucléation de cristaux β ; et la chaîne polypropylène dans la couche B est orientée dans une direction parallèle à l'orientation des cristaux de l'agent de nucléation de cristaux β.

10. Article moulé en résine à base de polypropylène selon l'une quelconque des revendications 7 à 9, dans lequel la couche A est une couche d'âme, et la couche B est une couche de peau.

11. Article moulé en résine à base de polypropylène selon l'une quelconque des revendications 7 à 10, comprenant, pour 100 parties en poids de la résine à base de polypropylène, 0,0001 à 1 partie en poids d'un agent de nucléation de cristaux β ; et 0,001 à 1 partie en poids d'un sel de métal d'acide gras représenté par la formule (1) ci-dessus.

12. Article moulé en résine à base de polypropylène selon l'une quelconque des revendications 7 à 11, dans lequel l'agent de nucléation de cristaux β est au moins un élément choisi dans le groupe consistant en :
des composés amide représentés par la formule (2) :
R²(-CONHR³)ₙ (2)
dans lequel n est un nombre entier de 2 à 6 ; R² est un résidu d'acide polycarboxylique aliphatique saturé ou insaturé en C₂ à C₁₈, un résidu d'acide polycarboxylique alicyclique en C₃ à C₁₈ ou un résidu d'acide polycarboxylique aromatique en C₆ à C₁₈ ; et deux à six R³ sont identiques ou différents et sont chacun un résidu d'amine aliphatique saturé ou insaturé en C₅ à C₃₀, un résidu d'amine alicyclique en C₅ à C₃₀ ou un résidu d'amine aromatique en C₆ à C₃₀ ; et
des composés amide représentés par la formule (3) : 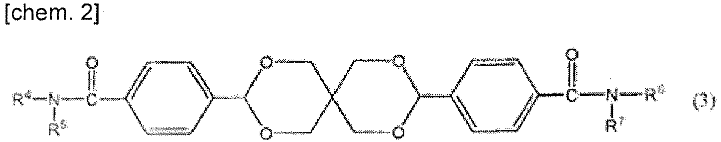 dans laquelle R⁴, R⁵, R⁶, et R⁷ sont identiques ou différents et sont chacun un atome d'hydrogène, un groupe alkyle en C₁ à C₂₀, un groupe cycloalkyle en C₅ à C₂₀ facultativement substitué ou un groupe aryle en C₆ à C₂₀ facultativement substitué ; et R⁴ et R⁵ ou R⁶ et R⁷ peuvent être pris ensemble pour former un groupe alkylène.

13. Procédé de production d'un article moulé en résine à base de polypropylène ayant une haute résistance aux chocs, comprenant les étapes de :
(i) dissolution de l'agent de nucléation de cristaux β dans la résine à base de polypropylène par chauffage, pour produire une composition de résine à base de polypropylène fondue ;
(ii) refroidissement de la composition de résine à base de polypropylène fondue obtenue à l'étape (i) pour déposer des cristaux de l'agent de nucléation de cristaux β ; et
(iii) fusion de la composition de résine à base de polypropylène refroidie à l'étape (ii) à une température supérieure ou égale à un point de fusion de la résine à base de polypropylène, et à laquelle l'agent de nucléation de cristaux β n'est pas dissous par chauffage, et moulage ultérieur de la composition résultante ; dans lequel
un sel de métal d'acide gras est présent dans la composition de résine à base de polypropylène dans l'étape (i) ou (ii).

14. Procédé d'amélioration de la résistance aux chocs d'un article moulé en résine à base de polypropylène, comprenant l'empilement d'au moins deux couches comprenant une résine à base de polypropylène, l'une de ces couches ayant une orientation de chaîne polypropylène différente de celle de l'autre couche ; et
chacune des couches ayant une valeur absolue maximale de biréfringence de 0,005 ou plus, les biréfringences des couches étant différentes l'une de l'autre, l'une étant positive et l'autre étant négative, dans lequel la biréfringence est mesurée selon la méthode de la description.
